# EUROPEAN PATENT SPECIFICATION

(11) **EP 4 768 848 B1**
(45) Date of publication and mention of the grant of the patent: **02.12.2026**
(21) Application number: 24223703.0
(22) Date of filing: 30.12.2024
(51) Int. Cl.: G01B 11/25

(54) **ARRANGEMENTS AND METHOD FOR PROVISION OF INFORMATION INDICATIVE OF INTENSITY PEAK WIDTH FOR USE WITH AN IMAGE SENSOR FOR A 3D IMAGING SYSTEM BASED ON LIGHT TRIANGULATION**
ANORDNUNGEN UND VERFAHREN ZUR BEREITSTELLUNG VON INFORMATIONEN ZUR INTENSITÄTSSPITZENBREITE ZUR VERWENDUNG MIT EINEM BILDSENSOR FÜR EIN 3D-BILDGEBUNGSSYSTEM AUF BASIS VON LICHTTRIANGULATION
AGENCEMENTS ET PROCÉDÉ POUR FOURNIR DES INFORMATIONS INDIQUANT UNE LARGEUR DE PIC D'INTENSITÉ À UTILISER AVEC UN CAPTEUR D'IMAGE POUR UN SYSTÈME D'IMAGERIE 3D BASÉ SUR UNE TRIANGULATION DE LUMIÈRE

(43) Date of publication of application: 01.07.2026
(73) Proprietor: Sick IVP AB, 583 30 Linköping (SE)
(72) Inventor: MELANDER, Johan, 583 34 Linköping (SE); MOE, Anders, 582 17 Linköping (SE)
(74) Representative: Bergenstråhle & Partners AB

(56) References cited:
- US-A- 4 636 639
- US-A- 4 835 402
- US-A1- 2010 141 946
- US-A1- 2023 335 027

## Description

### TECHNICAL FIELD

Embodiments herein concern arrangements and a method for provision of information indicative of intensity peak width and for use with an image sensor for a 3D imaging system based on light triangulation.

### BACKGROUND

Industrial vision cameras and systems for factory and logistic automation may be based on three-dimensional (3D) machine vision, where 3D-images are captured, such as of an object. By 3D-images it is referred to images that comprise also "height", or "depth", information and not, or at least not only, information, such as intensity and/or color, regarding pixels in only two-dimensions (2D) as in a conventional image.

In general, each pixel of an image captured by a camera has a position in image sensor coordinates that corresponds to a position of what the camera and image sensor imaged in the real world, or more particularly, information about light from a position in the real world that was sensed by image sensing element(s) of the image sensor and which image sensing element(s) correspond to a pixel. Typically, it is reflected light from what is being imaged, for example of an object, that is being sensed. Depending on camera and system, what light is used, and how illumination by the light is provided, the sensed light may contain various information about the position that reflected the light, such as about position on an object being imaged. Thus, a pixel of the captured image has a position in image sensor coordinates that correspond to a position in the real world, such as a position on an object. The sensed light may contain also additional information about the position and object properties at that position, such as information from light intensity, color, reflectivity, scatter etc. Many 3D machine vision cameras or systems, or in general 3D imaging systems, for 3D imaging, are based on multiple 2D images being captured by an image sensor of a camera, typically sequentially during a scan of the object. Each such 2D image may contain 3D information regarding a 2D profile of the object and thus the total of such 2D images may contain 3D information about the whole object and a 3D image of the whole object may be formed from this. The 3D image may be represented by a "point cloud" where respective point corresponds to a position on the object and is associated with coordinates in 3D regarding that point. Respective point may also be associated with further information about the point, for example color or other characteristics associated with the corresponding object point.

When a pixel has a 3D position instead of "only" a position in 2D, it may be named voxel.

Line scan image data results when image data of an image is scanned or provided one line at a time, typically by scanning an object to be imaged using a light plane projected as a light line on the object and measuring reflected light from the object. A special case of 3D imaging by scanning is 3D imaging based on light triangulation, where structured light, for example a specific pattern, typically a light plane, or "sheet of light", is used, and an object scanned through and/or by this light plane. A light line is projected on the object during the scan, corresponding to where said sheet or plane intersects with the object. Laser is often preferred but also other light sources able to provide structured light such as a light plane may be used, e.g. light sources able to provide light that stays focused and do not spread out too much, for example light sources based on Light Emitting Diodes (LEDs). Instead of a light plane corresponding to a "sheet of light", for example, a light plane corresponding to an edge of illumination, that is, a light edge, may be used.

3D machine vision systems are often based on light triangulation. In such a system there is a light source illuminating the object with structured light, such as a specific light pattern, typically a light plane as mentioned above. This kind of 3D machine vision systems or devices may be referred to as systems or devices for 3D imaging based on light, or light plane, triangulation, or simply laser triangulation when laser light is used. A light line projected on the object and is imaged by a camera, that is, the light reflected from the object is imaged. Along the light line, 3D characteristics is captured through the light triangulation, corresponding to a profile of the object with height information. By scanning the whole object like this, corresponding to a line scan, and involving movement of the line and/or object, 3D characteristics of the whole object can be captured, corresponding to multiple 2D profiles of the object and based on which a 3D image of the object can be formed as discussed above. To produce a profile image of the object during the scan, the reflected light from the object is captured by an image sensor of a camera, particularly intensity peaks thereof, are detected in the image data. The peaks occur at positions corresponding to locations on the object where the incident light, corresponding to said light line, was reflected from the object. The position in the image of a detected peak will map to a position on the object from where the light resulting in the peak was reflected in accordance with the light triangulation that the system is configured and has been setup to perform.

Peak finding algorithms typically operate in the digital domain and the aim is to find a center position of the peak's light distribution and at sub-pixel resolution. This means that an image with the intensity peaks, involving analog pixel values corresponding to light sensed by sensor elements corresponding to pixels of the image sensor, first must be read out from the image sensor and be analog-to-digital (A/D) converted.

As realized from the above, the intensity peaks comprise information of interest. However, this is not only true for reasons of being able to find peak position with sub-pixel resolution as discussed above. In light triangulation applications, the intensity peak width also carry information about the surface that reflected the light that resulted in the intensity peak. More specifically, when an intensity peak in light triangulation is used for determining a 3D position of a point of the surface of an object being imaged, the intensity peak width contains information how this point affected the light it reflected and that resulted in the intensity peak, for example how the point scattered light. The intensity peak width is thus for example a measure of light scatter that is of interest to know and/or is used in many light triangulation applications.

Hence, for example since it is measure of light scatter, it is of interest to be able to get indication, such as a measure and/or estimate, of the intensity peak width. Further, it of interest to be able to provide such indication, and in a way, that is robust and effective. Note that in the following a measure of the intensity peak width of the imaged light line and measure of light-scatter may be used interchangeably.

An example of a prior art method for estimating intensity peak width is to, for each column of an image that is imaging an intensity line resulting from light triangulation, sum a number of pixels a certain distance from a maximum peak intensity, on both sides of the peak intensity. Such method may be referred to as "offset scatter". This method is sensitive to noise in the light line, e.g. speckle noise when the light is laser. It may also be difficult to tune this method to get "good" data, including to set a the distance and number of pixels to sum. The method also relies on that the pixels to sum are available in the image data set surrounding the maximum intensity.

In EP1985969, on the other hand, scatter data indicative of the intensity peak width is estimated by using a zero order moment and a second order moment. This method may be referred to as "moment scatter". The method is useful when the 3D data, particularly the intensity peak position with sub-pixel resolution, is calculated using a center-of-gravity algorithm. In this case the zero order moment is already available since it is has been calculated for use in the 3D data calculation. Only the second order moment need to be calculated and then be used with the zero order moment to estimate the scatter data. When a center-of-gravity calculation is not being used, the method is less effective.

Further, it is in general desirable to remove or reduce delays to thereby facilitate or enable higher throughput and/or lower latency for a 3D imaging system, for example provide improvements regarding how fast a 3D imaging system based on light triangulation can provide 3D images of objects and related information, including for example estimates of intensity peak width and scatter data, and/or to be able to, or better support, high, or higher, speed applications. For example, US4636639 discloses a device for the optical measurement of the edge to edge dimension of an object. US4835402 discloses a method for quantitatively determining the shape of small size protruding patterns.

US2010/0141946A1 discloses a method and apparatus for determining the amount of scattered light in a machine vision system.

The invention is defined in appended independent claims 1 and 12-14.

### SUMMARY

In view of the above, an object of the invention is to provide one or more improvements or alternatives to the prior art, such as to provide a further alternative and/or more effective and/or robust way of providing indications, such as a measures and/or estimates, of intensity peak width regarding intensity peak lines, particularly in image data from an image sensor of a camera used in an 3D imaging system based on light triangulation.

According to a first aspect of embodiments herein, the object is achieved by a method, performed by device(s), for providing information indicative of an intensity peak width of an intensity peak along a pixel line of pixels comprising the intensity peak and having intensity pixel values that are part of the intensity peak. Said pixels correspond to pixel elements of an image sensing area of an image sensor and have attained their intensity pixel values from exposure of the image sensing area as part of image sensing by the image sensor of light reflected from a surface. The intensity peak being formed of such reflected light sensed by the image sensor. Said device(s) computes a first value comprising a magnitude of a lower order Discrete Fourier Transform, DFT, coefficient regarding pixel intensity values for pixels along the pixel line that are comprising the intensity peak. Said device(s) computes a second value comprising a magnitude of a another, higher order DFT coefficient regarding pixel intensity values for pixels along the pixel line that are comprising the intensity peak. Said higher order being a higher order DFT coefficient than said lower order DFT coefficient. The device(s) provides said information indicative of the intensity peak width based on said first and second values, wherein the image sensing by the image sensor is part of light triangulation based three-dimensional, 3D, imaging by an imaging system for 3D imaging of an object having said surface, wherein the imaging system comprises a camera with the image sensor and a light source for providing illumination resulting in said light on said surface as part of said light triangulation based 3D imaging.

According to a second aspect of embodiments herein, the object is achieved by device(s) for providing information indicative of an intensity peak width of an intensity peak along a pixel line of pixels comprising the intensity peak and having intensity pixel values that are part of the intensity peak. Said pixels correspond to pixel elements of an image sensing area of an image sensor and have attained their intensity pixel values from exposure of the image sensing area as part of image sensing by the image sensor of light reflected from a surface. The intensity peak being formed of such reflected light sensed by the image sensor. Said device(s) is/are configured to compute a first value comprising a magnitude of a lower order Discrete Fourier Transform, DFT, coefficient regarding pixel intensity values for pixels along the pixel line that are comprising the intensity peak. Said device(s) is/are further configured to compute a second value comprising a magnitude of a another, higher order DFT coefficient regarding pixel intensity values for pixels along the pixel line that are comprising the intensity peak. Said higher order being a higher order DFT coefficient than said lower order DFT coefficient. Moreover, the device(s) is/are configured to provide said information indicative of the intensity peak width based on said first and second values, wherein the image sensing by the image sensor is part of light triangulation based three-dimensional, 3D, imaging by an imaging system for 3D imaging of an object having said surface, wherein the imaging system comprises a camera with the image sensor and a light source for providing illumination resulting in said light on said surface as part of said light triangulation based 3D imaging.

According to a third aspect of embodiments herein, the object is achieved by one or more computer programs comprising instructions that when executed by one or more processors causes device(s) to perform the method according to first aspect.

According to a fourth aspect of embodiments herein, the object is achieved by one or more carriers comprising the one or more computer programs according to the third aspect.

Embodiments herein are based on realization that said first and second values that comprise or correspond to magnitudes of said lower and higher order DFT coefficients, and more particularly how they relate to each other, comprise information indicative of the width of the intensity peak. The width, in turn, as explained in the Background, may indicate light scatter from a point on the surface that caused the reflection resulting in the intensity peak. Intensity peak estimation based on embodiments herein have shown ability to provide results that are at least as good as other existing methods, such as "moment scatter" mentioned in the Background. In some situations and/or for some applications where intensity peak width is of interest, a certain method for intensity peak width estimation may be preferred and/or more advantageous than another, for example depending on information that is needed, is available already, type of devices involved, other actions being performed etc. It is hence in general advantageous with a further alternative method for provision of information indicative, such as by being an estimate, of intensity peak width.

Moreover, the first and second values may be obtained by computations that can be performed by relatively simple operations, that fully or partly can be performed directly on the image sensor, without having to first read out image data from the image sensor. If the image sensor performs computations to compute the first and second values, for example per respective pixel column of the image sensing area with said pixel line corresponding to a pixel column, this may be particularly advantageous since it enables fast and parallel processing per column on the image sensor, typically "on chip", and with provision of results, for example said information, per column as well. This means that said information indicative of the intensity peak width can be provided efficiently and fast, already in connection with provision of the image data from the image sensor and/or that the image data need not be transferred from the image sensor at all if, for example, only said information is of interest to find out about.

### BRIEF DESCRIPTION OF THE DRAWINGS

Examples of embodiments herein are described in more detail with reference to the appended schematic drawings, which are briefly described in the following.
Figure 1 schematically illustrates an example of a prior art 3D imaging system based on light triangulation.
Figure 2 schematically illustrates an example of an imaging system for 3D imaging based on light triangulation that embodiments herein can be performed with, and/or that can be configured to perform embodiments herein.
Figure 3A schematically shows an example of an image sensor that embodiments herein can be performed with and/or that can be configured to perform embodiments herein.
Figure 3B schematically shows an intensity peak along a column of the image sensing area in Figure 3A.
Figures 4A-B relate to a first example of an intensity peak comprised by a sequence of pixels and DFT coefficients computed for the sequence of pixels.
Figures 5A-B relate to a second example of an intensity peak comprised by a sequence of pixels and DFT coefficients computed for the sequence of pixels.
Figure 6 is a flowchart for schematically illustrating and exemplifying a first method according to embodiments herein.
Figures 7-9 are examples of how different measures of how a lower order DFT coefficient and higher order DFT coefficient relate to each other and how this will map to intensity peak width.
Figure 10 is a schematic block diagram for illustrating embodiments of how one or more devices may be configured to perform the method and actions described in relation to Figure 6.
Figure 11 is a schematic drawing illustrating embodiments relating to computer program(s) and carrier(s) thereof.

### DETAILED DESCRIPTION

Embodiments herein are exemplary embodiments. It should be noted that these embodiments are not necessarily mutually exclusive. Components from one embodiment may be tacitly assumed to be present in another embodiment and it will be obvious to a person skilled in the art how those components may be used in the other exemplary embodiments.

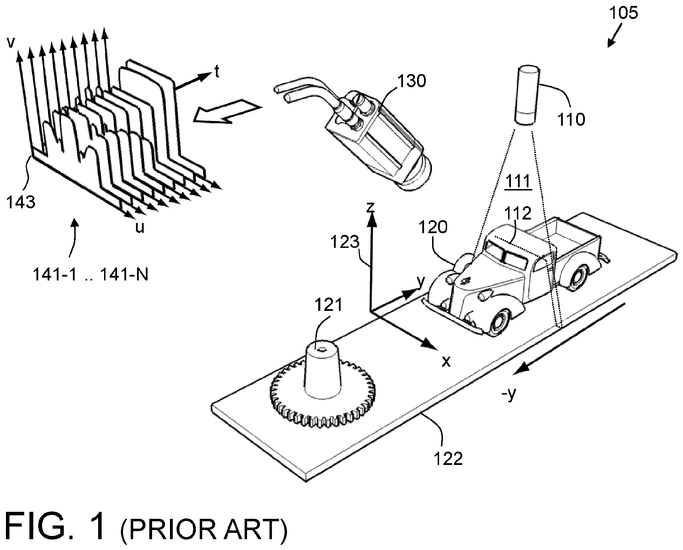

**Figure** 1 schematically illustrates an example of such type of imaging system as mentioned in the Background, namely an imaging system 105, for 3D machine vision, or simply 3D imaging, based on light triangulation, i.e. imaging for capturing information on 3D characteristics of objects using a camera 130. The system 105 is in the figure shown in a situation of normal operation, i.e. typically after calibration has been performed and the system is thus calibrated. The system 105 is configured to perform light triangulation, here in the form of sheet of light triangulation as mentioned in the Background. The system 105 further comprises a light source 110, e.g. a laser, for illuminating objects to be imaged with structured light, such as a specific light pattern, typically a light plane 111 as shown in the figure, corresponding to a sheet of light. The light is typically laser light but may alternatively for example be light from one or more Light Emitting Diodes (LEDs). An alternative to a light plane but with similar effect is a light edge, that is, an edge of an area with illumination. The generated light and illumination is typically provided through one more lenses of the camera 130, for example in order to focus the light. Moreover, the camera 130 is typically configured and located so that it, based on the so called Scheimpflug principle or Scheimpflug focusing, will have a focus plane co-located with, in other words, aligned, with the light plane 111. This way object reflections that occur in the light plane will be in focus in the image sensor. In the shown example, the objects subject to the imaging are exemplified by a first object 120 in the form of a car and a second object 121 in the form of a gear wheel construction. When the light plane 111 is incident on an object, this corresponds to a projection of the light plane 111 on the object, which may be viewed upon as the light plane 111 intersects the object. For example, in the shown example, the light plane 111 results in a light line 112 on the object 120. The light is reflected by the object, more specifically by portions of the object at the intersection, i.e. at the light line 112 in the shown example. The camera 130 comprises an image sensor (not shown in the figure). The camera and image sensor are arranged in relation to the light plane 111 so that the light plane 111 when reflected by the objects, through the camera 130 become incident light on the image sensor. The image sensor is an arrangement, typically implemented as a chip, for sensing and converting incident light to image data, for example as intensity values resulting from light sensed by sensing elements corresponding to pixels of an image sensing area of the image sensor. For example, in the shown example, the light plane 111 will at the light line 112 on a portion of the car roof of the object 120 be reflected towards the camera 130 and image sensor, which thereby produce and provide image data with information about said portion of the car roof. With knowledge of the setup, including the geometry, of the system 105, e.g. how image sensor coordinates relate to real world coordinates, such as coordinates x,y,z of a coordinate system 123, e.g. Cartesian, relevant for the object being imaged and its context, the image data may be converted to information on 3D characteristics, e.g. a 3D shape or profile, of the object being imaged in a suitable format. The information on said 3D characteristics, e.g. said 3D shape(s) or profile(s), may comprise data describing 3D characteristics in any suitable format.

By moving e.g. the light source 110 and/or the object to be imaged, such as the first object 120 or the second object 121, so that multiple portions of the object are illuminated and cause reflected light upon the image sensor, in practice typically by scanning the objects, image data describing a more complete 3D shape of the object may be produced, e.g. corresponding to multiple, consecutive, profiles of the object, such as the shown profile images 141-1 - 141-N of the first object 120, where each profile image shows a contour of the first object 120 where the light plane 111 was reflected when the image sensor of the camera 130 sensed the light resulting in the profile image. As indicated in the figure, a conveyor belt 122 or similar may be used to move the objects through the light plane 111, with the light source 110 and the camera 130 typically stationary. Alternatively the light plane and/or the camera 130 may be moved over the object, so that all portions of the object, or at least all portions facing the light source 110, are illuminated and the camera can receive light reflected from different parts of the object desirable to image.

As understood from the above, an image frame provided by the camera 130 and its image sensor, e.g. of the first object 120, may result in any one of the profile images 141-1 - 141-N. As mentioned in the Background, each position of the contour of the first object shown in any of the profile images 141-1 - 141-N are typically determined based on identification of intensity peaks in image data captured by the image sensor and on finding the positions of these intensity peaks, e.g. by means of one or more intensity peak finding algorithms. The system 105 and conventional peak finding algorithms are typically configured to, in each image frame, search for an intensity peak per pixel column. If sensor coordinates are u, v, as indicted in the figure, may be along image sensor rows and be used to indicate a position in such row, e.g. corresponding to an image sensor column. Correspondingly, v may be along image sensor columns and be used to indicate a position in such column, e.g. corresponding to an image sensor row.

For each position u of an image frame it may be searched for a peak position along v, e.g. by means of a peak finding algorithm as mentioned above, and the identified peaks in an image frame may result in one the profile images 141-1 - 141-N as shown in the figure. The profile images are formed by image points in a sensor based coordinate system 143, u, v, t that as mentioned above relate to real world coordinates, such as in the coordinates x,y,z of the coordinate system 123. The total of image frames and profile images can be used to create a 3D image of the first object 120 for example in the form of such "point cloud" mentioned in the Background where respective point corresponds to a position on the object and is associated with coordinates in 3D regarding that point.

As a development towards embodiments herein, the situation indicated in the Background will first be further elaborated upon.

A reasonable assumption, and supported by practical findings, is that the cross section of an intensity peak line resulting from the light, typically laser, used in light triangulation, has a Gauss, or Gaussian, shape, thus normal distribution. It can then be shown mathematically that also the Discrete Fourier Transform (DFT) applied to the pixels surrounding the maximum intensity of the intensity peak has such shape. In other words, the DFT applied to the pixels covering the intensity peak and thus pixels with image data comprising the intensity peak. Further, mathematically, there is a relation between the width of such light line with Gauss shape, the "sigma of the light", and the width of the DFT with Gauss shape, the "sigma of the DFT". Moreover, it can be shown that if the magnitude of the lowest order DFT coefficient (DFTO, or zero order DFT coefficient) is divided with the magnitude of the second lowest DFT coefficient (DFT1, or first order DFT coefficient), that is, DFT0/DFT1, this is a measure, in practice corresponding to an estimate, of the intensity peak width, "the sigma of the light". This, in turn, as explained above in the Background, is a measure of light scatter caused by the object point that reflected the light resulting in the intensity peak. In general, the relation between any higher order DFT coefficient and a lower order DFT coefficient, when both exist as substantial coefficients, will contain information that can be used as indication of the intensity peak width. For example, alternatives may include to instead compute any one of DFT0/DFT2, DFT1/DFT2, DFT0-DFT1, DFT0-DFT2, etc. However, using lower order coefficients are typically preferred and can provide better estimates of widths in a greater range. It is in any case beneficial to use DFTO since it in practice always will exist as a substantial value that simply can be computed by adding the pixel values of the pixels surrounding the maximum intensity of the intensity peak, which thus are the pixels that the DFT concerns and is being computed for.

The above have been carried out in practical tests with good results and some examples of this and of the mentioned mathematical relations are provided further below. Some tests have also been performed regarding 3D imaging based on light triangulation of objects with wooden surface. Wood has a surface that has natural variations that affect light scatter and thus it may be of particular interest to be able to estimate the light scatter by estimating width of the intensity peaks resulting from the light triangulation. The light scatter contain information for example about the type and quality of the wood and how this may vary for the wood object, at which positions on the object etc.

A method based on DFT as above for getting indication, such as measure and/or estimate, of intensity peak width and thus of light scatter, may be referred to as "DFT scatter" to, for example, differentiate it by name from the other methods mentioned in the Background, "offset scatter" and "moment scatter". The method based on DFT, that is, "DFT scatter", has some advantages over other methods, for example:
- It enables more robust peak width estimation compared to "offset scatter", for example since it handles laser speckles in a better way when/if laser is used as light for the light triangulation.
- It does not require to use a fix distance from a detected maximum intensity pixel.
- Peak width estimation can be made at least equally good as from "moment scatter" based on experimental results and does not require any "center-of-gravity" calculation.
- It can be performed using computations that are relatively simple and can be implemented with computational efficiency on or in close connection with the image sensor.

A method based on DFT, or in other words "DFT scatter", as mentioned above and disclosed herein, thus enable intensity peak width estimations, and corresponding light scatter measurements, that are on pair with "moment scatter" and that, at least in some situations, may be more computationally beneficial to use than "moment scatter".

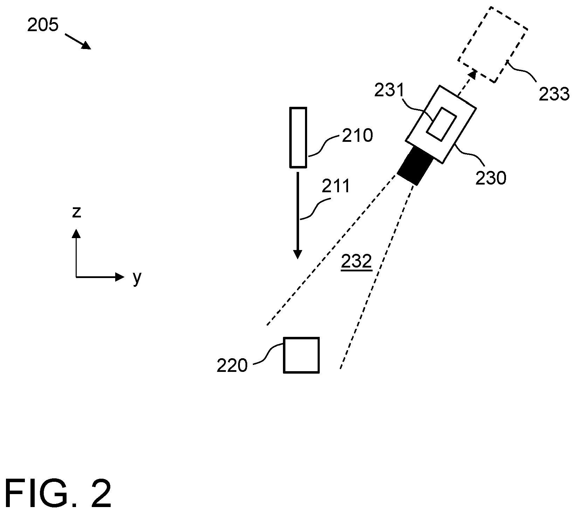

**Figure** 2 schematically illustrates an example of an imaging system 205 for 3D imaging based on light triangulation that embodiments herein can be performed with, and/or that can be configured to perform embodiments herein. The imaging system 205 may structurally correspond to the imaging system 105 but here shown in more simplified manner. The figure also shows a context in which an image sensor 231 configured to perform according to embodiments herein, as described further below, may be used. The image sensor 231 is part of a camera 230 comprised in the imaging system 205 and that may be used for 3D imaging based on light triangulation and in that context perform embodiments herein.

Hence, the figure shows:
An object 220 that may correspond to the object 120, and is shown located at least partly within field of view 232 of the camera 230.

A light source 210 of the imaging system 205 configured to illuminate the object 220 with light 211 for 3D imaging based on light triangulation, typically in the form of structured light, such as a specific light pattern, resulting in light lines(s) on and reflected by the object 620 and then captured by the camera 230 with the image sensor 231. For example, illumination by the light 211 may be in the form of a "sheet of light", that is, a light plane, resulting in a light line on the object corresponding to where the light plane intersects the object. Another example of structured light that can be used as the first light is a light edge, i.e. an edge of an area or portion with illumination. Light from LEDs is for example possible instead of from laser. The illumination is in the example in a vertical direction, i.e. substantially parallel to the z-axis shown in the figure, thus with the light plane in the z-x plane. However, other direction or directions of illumination are of course possible to use with embodiments herein.

A computing device 233, such as computer or similar, may be part of the imaging system 205. It may be connected to the camera 230 and/or the light source 210 and may be configured to receive and process image related data and information from the camera 230 and/or from the image senor 231 via the camera 230. Further, the computing device 233 may be configured to control the imaging system 205 and/or the camera 231 and/or the imaging sensor 231 thereof, and/or the light source 210. The computing device 233 may further be configured to perform and/or be involved in some of the actions relating to embodiments herein, as described further below. Alternatively or additionally the computing device 233, or corresponding functionality, may fully or partly be integrated in the same unit as the camera 230 and it may then be considered that the camera 630 has this functionality.

The object 220 may thus be illuminated by the light 211 and images be captured by the camera 230 with the image sensor 231 as in conventional 3D imaging based on light triangulation.

Correspondingly as in conventional light triangulation based imaging systems, the imaging system 205 may be configured to move the light source 210 and/or the light 211 it provide, and/or the object 220 in relation to the illumination by the light 211 as provided by the light source 210, so that at different consecutive time instants, different consecutive portions of the object 220 are illuminated by the light 211. To accomplish this, the object 220 may be moved as part of transportation of the object 220, for example by a conveyor belt or similar. After reflection from the object 220, the light is sensed by the image sensor 231 via the camera 230. A respective image frame is associated with a respective time instant of when the image frame was sensed, i.e. captured, and with a respective portion of the object 220 from which the image sensor 231 sensed reflected light 211 at the respective time instant.

Image frames and/or information derived from image frames, such as intensity values of pixels part of intensity peaks of light line(s) imaged as part of the light triangulation, intensity peak positions, and/or other information about intensity peaks, such as regarding their width, may be provided by the camera 230 and/or the image sensor 231, and may be transferred for further processing within and/or outside the camera 230, e.g. to the computing device 233.

Region Of Interest (ROI), particularly Window Around, or At, Maximum (WAMs), may beneficially be used with embodiments herein. WAM is further explained and discussed below. The image sensor involved in embodiments herein, such as the image sensor 231, may be implemented and/or have corresponding functionality as disclosed in EP4266673A1 for facilitating using WAMs as ROIs.

Before going into further details and examples regarding embodiments herein, it will next, to enable better understanding, be some examples and discussion in an image and image sensor context. The image may result from the image sensor 231 in the camera 230 or the imaging system 205. More specifically, the examples and discussion relate to imaged light lines, intensity peaks thereof, and WAM(s) mentioned above.

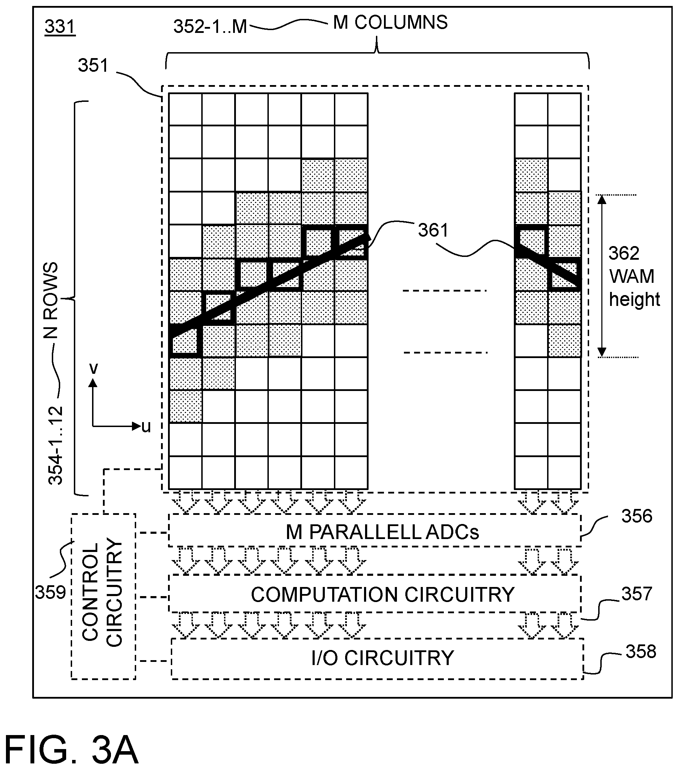

**Figure 3A** schematically shows an example of an image sensor 331 with an image sensing area 351 that is formed by a total of pixels shown as squares. The image sensor 331 is one that embodiments herein can be performed with and/or that can be configured to perform embodiments herein. The pixels of the image sensor 331 correspond to light sensing elements and may be of conventional type. The total of pixels are in the example arranged in N rows, in shown example N=12, and M columns. There is thus 352-1..352-M columns and 354-1..352-12 rows. The shown view is broken along the rows.

In the image sensing area 351, an intensity peak line 361 has been drawn and pixels with shading indicate a ROI being a WAM formed by 5 pixels per column, thus with a WAM height 362 that in the example is 5 pixels, and centered around said intensity peak line 361. Of course, no such line or WAM, if such is used, can be seen by visual inspection of a corresponding real image sensing area 351. The intensity peak line 361 and WAM is drawn just to facilitate understanding of how intensity peaks and WAM may relate to each other and to the image sensor. The intensity peak line 361 corresponds to where intensity peaks may be located with sub-pixel resolution and may result from exposure of the image sensor 331 when it is part of a camera in a 3D imaging system based on light triangulation, such as the imaging system 205. If an image based on the total of pixels would be read out from the image sensor 331 after it had been exposed to a light intensity line having intensity peaks with light distributions having peaks according to the intensity peak line 361, the light intensity line would be visible in the image and the intensity peak line 361 could be detected from that. Such intensity line and the intensity peak line 361 may thus result from reflected light from an object, for example the object 220, when the object has been illuminated by a light line during light triangulation.

In practice, each pixel can typically hold only a single pixel value corresponding to an intensity value. The WAM in each column 352 is centered on, and thus surrounds, a pixel detected in that column to hold a maximum pixel value, corresponding to a maximum intensity. Such pixels are marked with bold lines in the figure. The total of local WAMs, that is WAM per column for all columns M. form a total WAM that is centered around, and thus surrounds, the intensity light line 361.

In the example there is a number N=12 of pixel rows 0..11, corresponding to image sensor rows 354-1.. 354-12, and a number M of pixel columns 1..M, corresponding to image sensor columns 352-1..352-M.

Typically pixel values are read out in parallel per pixel row from the image sensor 331, that is, the pixel values of pixels in the same row are read out in parallel and are then analog-to digital (A/D) converted. As indicated in the figure, the M columns 352 may be connected to M parallel A/D converters (ADCs) 356. An alternative may be to instead read out pixels with the same WAM height position in parallel, meaning that all shaded pixels in Figure 3A, i.e. corresponding to the WAM, can be read out by 5 consecutive parallel readouts. A detailed example of such implementation is for example disclosed in EP4266673A1.

After the A/D conversion, thus in a digital domain, there may be some processing and/or computing circuitry, such as the computation circuitry 357 schematically shown in the figure, that for example operate on the resulting digital image data, such as on pixels and their values per column and/or from multiple columns. Thus, there may be parallel computations. Respective parallel computation may be regarding pixel values of pixels from a respective column. Computations, for example relating to DFT coefficients, may be performed for all columns in parallel. There may further be memory elements involved for temporarily storing pixel values and intermediate data during such processing and/or computations. Such memory elements may enable processing and computations to be performed by the image sensor on pixel values from several pixels in respective columns, for example all pixels of the WAM, or another number of pixels, that cover an intensity peak per column, such as the intensity peak per column around the intensity peak line 361.

The image sensor 331 also comprises some input/output (I/O) circuitry 358 for example involved in input for controlling of the image sensor and to enable reading out of image data from the image sensor 331 after the A/D conversion and/or to enable to read out information, for example resulting from computations performed by the computation circuitry 357. When the image sensor provides something for readout from the image sensor, this is via I/O circuitry, such as the I/O circuitry 358.

The figure also shows control circuitry 359 involved in the control of the image sensor 331 and parts thereof, for example for the addressing and/or selection of columns and/or row and/or pixels to be A/D converted etc. The control circuitry 359, may also be involved in temporarily storing information regarding a ROI such as WAM(s) in use, which pixels that are involved in the WAM(s) etc.

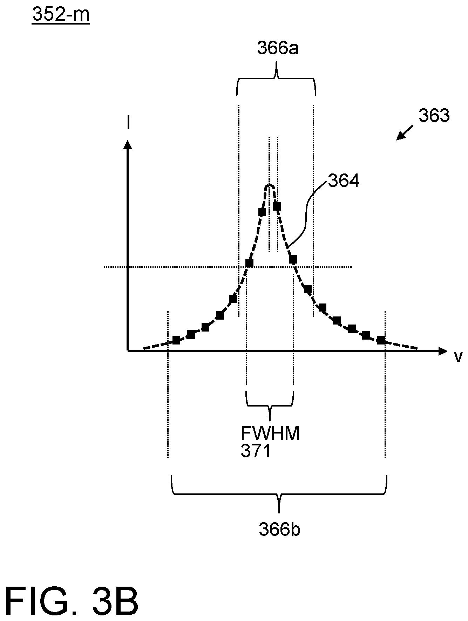

**Figure 3B** schematically shows an intensity peak 363 having a light distribution 364. The light distribution is captured, which can be seen as it has been sampled, by intensity pixel values of pixels that comprises the intensity peak that thus corresponds to a cross section of the intensity peak line 361. The intensity peak is along a pixel line corresponding to a column 352-m that may be any one of the columns 352-1..352-M. The light distribution 364 is shown along axis v, that is, in a direction corresponding to along a column, as in the case of the column 352-m.

The intensity values of pixels along the column 352-m are shown as small black squares in the figure. As can be seen the intensity values indicate an intensity I and belong to different rows, that is, are at different row coordinates v and thus vary along the column. The intensity values occur according to the light distribution 364, as mentioned above, has a Gaussian, "bell", shape.

What is shown are pixels from a single column, the column 352-m, and a WAM 366a for this column is marked out, and thus corresponds to the shaded pixels in a column in Figure 3A. Hence, the WAM 366a has the WAM height 362 of 5 pixels. As can be seen, for the light distribution 364 in the example, 5 pixels do not provide so good coverage for the intensity peak 363. If looking at the whole peak according to the shown light distribution 364, the WAM 366a hardly covers its Full Width At Half Maximum 371. Another sequence of pixels for the column 352-m is also shown in the figure, namely pixels corresponding to a WAM 366b covering 15 pixels. For a specific application of embodiments herein, it may be preferred to use a WAM, or corresponding sequence of pixels, covering a intensity peak, that with some margin will cover the widest intensity peaks that are excepted for an application and that embodiments herein should be able to handle for that application. In practice it may be recommended to make sure to cover at least twice the FWHM that is desirable to be able to handle and that thus corresponds to a max FWHM for the application. For example so that a number of pixels corresponding to the max FWHM are covered on each side of, that is, around, the maximum intensity pixel of the intensity peak.

A WAM per column and total WAM formed by multiple WAM per column is not only used for selecting pixels to be used with embodiments herein. As already indicated above, an even more common use is for selecting out pixels around a intensity peak to use them for finding the peak position with sub-pixel resolution. For that purpose a WAM height should be used that results in a sufficient coverage of the light distribution 364 so that a peak finding algorithm can exploit the light distribution 364 to find an actual center position of the light distribution 364 with sub-pixel resolution. A peak finding algorithm is typically used outside the image sensor after digital image data has been read out from the image sensor. As indicated in the figure, as well as it was indicated in Figure 3A, the actual peak position is with some offset from the center position of the pixel with the maximum intensity value and that the WAM is centered around.. In practice, for this purpose, a WAM height should typically be used that covers about 75% or more of the energy in the intensity peak. For a typical sensor and setup this may mean a WAM height in a range 7-30 pixels. However, there may be situations when also less than 7 and more than 30 may be used. Covering 75% of the energy will typically be sufficient also for the purpose of embodiments herein. For an application where it is of interest to use a WAM for both purposes, it is typically advantageous to use one and the same total WAM and WAM height that is sufficient for both purposes.

As understood from the above, when computing the DFT, or rather magnitude of some DFT coefficients, as in embodiments herein, this may be done for pixels per column corresponding to a WAM or a corresponding sequence of pixels sufficiently covering the intensity peak. A WAM will by definition relate to pixels covering an intensity peak per column and thus of interest also for "DFT scatter" and embodiments herein. A WAM with same number of pixels belonging to the WAM in each column, corresponding to the WAM height 362, means that the same number of computations and in a corresponding manner can be performed per column to compute DFT coefficients. This is advantageous for embodiments herein, also if not explicitly using available WAM functionality.

When a WAM is available and/or the image sensor has support for provision of such, it may be advantageous to use WAM with embodiments herein, although not necessary. It is possible to select out a sequence of pixels covering an intensity peak and compute magnitude of DFT coefficients for these without using a WAM and/or WAM functionality of the image sensor. For example, the magnitude of DFT coefficients involved in embodiments herein may be computed for pixels covering, or comprising, an intensity peak, but that do not belong to what typically would be referred to as a WAM. Even different number of pixels per column may be used for computing the corresponding DFT coefficient, and/or for different DFT coefficients, although without no apparent advantage since it would rather require unnecessary additional computations to be performed, for example to achieve consistency and be able to more easily compare results between columns.

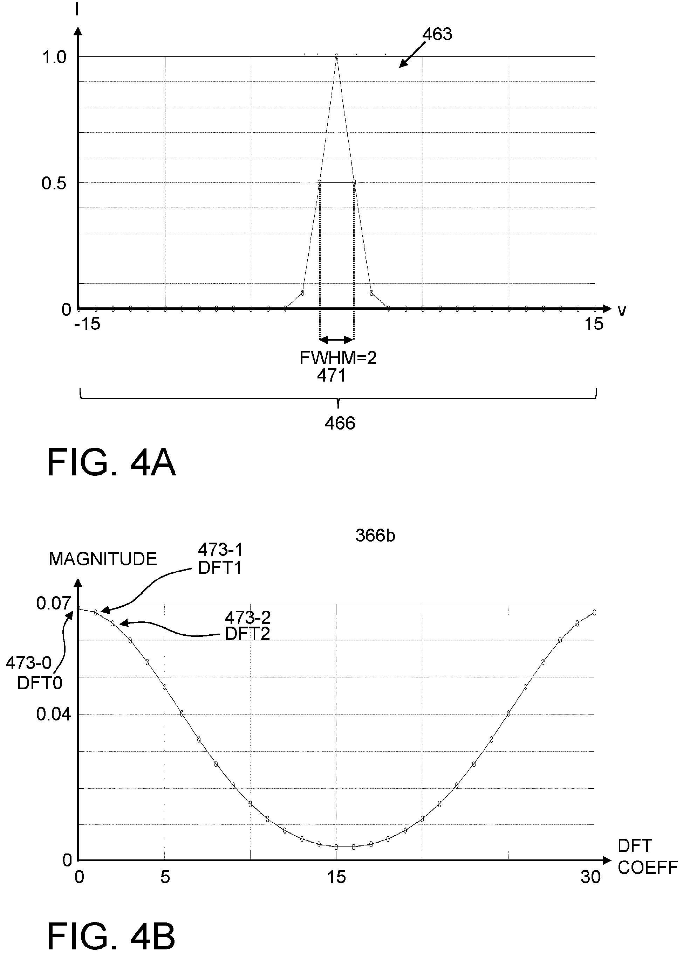

**Figures 4A-B** relate to a first example of an intensity peak 463 comprised by a sequence of pixels 466 and magnitude of DFT coefficients 473 computed for the sequence of pixels. The example is for showing relationships between magnitudes of DFT coefficients that embodiments herein are based on and will be used for further examples below that are relevant for embodiments herein.

Figure 4A shows, in a corresponding view as Figure 3B, the intensity peak 463 with normalized intensity values for the pixels 466 that comprise the intensity peak 463. The pixels 466 are in the example 31 pixels positioned along v at integers -15 to +15, including 0. As realized from what is shown, there are in this example only 5 of the pixels 466 that have pixel values actually contributing to the peak 463 that looks rather narrow and "pointy", with straight lines binding the values of neighboring pixels together, and the peak has no evident Gaussian shaped distribution. The width of the intensity peak 463 is indicated by the peak's Full Width at Half Maximum (FWHM) 471. The FWHM is the width of the peak at half the peak's maximum intensity. The FWHM can be suitable width measurement for use with embodiments herein, but width measure at also other peak heights can be used, or some other measure indicating width. However, to facilitate and for comparison, for example between different widths that may correspond to different degree of light scatter from different object positions, the same type of width measure is preferably used. In the following, and as a non-limiting example, the type of width measure used is FWHM. The FWHM 471 corresponds to a width of 2 pixels and is example of a narrow width.

Figure 4B shows the magnitude of the DFT coefficients for the DFT computed for the intensity peak 463, that is, for the pixels 466. As can be seen the DFT has a length, and thus a number of coefficients, corresponding to the number of samples it was computed for, here corresponding to the number of pixels 466. The three first, starting from the lowest order, DFT coefficients are explicitly marked out, a DFT coefficient 473-0 being the lowest order DFT coefficient, DFTO, a DFT coefficient 473-1 being the second lowest order DFT coefficient, DFT1, and a DFT coefficient 473-2 being the third lowest order DFT coefficient, DFT2.

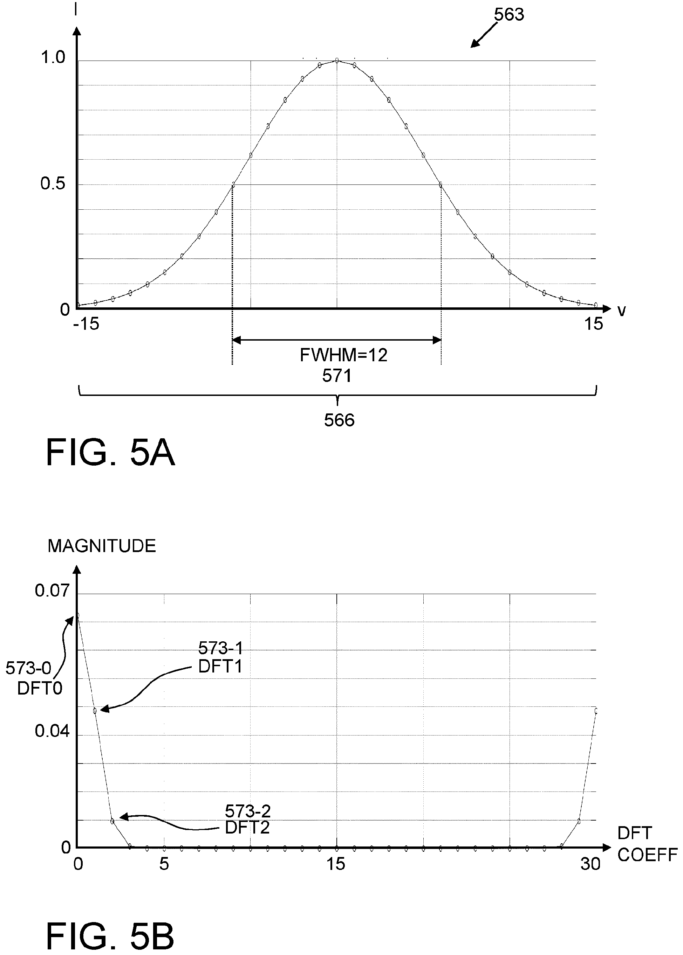

**Figures 5A-B** relate to a second example of an intensity peak 563 captured by a sequence of pixels 566 and magnitude of DFT coefficients 573 computed for the sequence of pixels. The example is for showing relationships between the magnitudes of DFT coefficients that embodiments herein are based on and will be used for further examples below relevant for embodiments herein.

Figure 5A shows, in a corresponding view as Figure 3B and Figure 4A, the intensity peak 563 with normalized intensity values for the pixels 566 that comprise the intensity peak 563. The pixels 566 are also in the second example 31 pixels positioned along v at integers -15 to +15, including 0, that is, same number of pixels as in Figure 4A. It also seems that it is the same pixels involved, but that should be viewed as an effect of example. In practice, especially if peaks are coming from 3D imaging by light triangulation, different peaks typically occur at different positions. What is shown in Figures 4A and 5A could further for example be peaks from different columns and occurring at the same time on the image sensing area 351. In any case, as should be realized from what is shown, there are in this example more pixels, approximately all 31, having pixel values actually contributing to the peak 563 that here has a typical Gaussian "bell shape", visible even with straight lines binding the values of neighboring pixels together. The width of the intensity peak 563 is indicated by the peak's FWHM 571. The FWHM 571 corresponds to a width of 12 pixels and may be compared to the FWHM 471 of the intensity peak 463 that clearly has a smaller more narrow width.

Figure 5B shows the magnitude of the DFT coefficients for the DFT computed for the intensity peak 563, that is, for the pixels 566. As can be seen, also here the DFT has a length, and thus a number of coefficients, corresponding to the number of samples it was computed for, here corresponding to the number of pixels 566. The three first, starting from the lowest order, DFT coefficients are explicitly marked out, a DFT coefficient 573-0 being the lowest order DFT coefficient, DFTO, a DFT coefficient 573-1 being the second lowest order DFT coefficient, DFT1, and a DFT coefficient 573-2 being the third lowest order DFT coefficient, DFT2.

A DFT can in general be considered to correspond to "frequency" content of the signal that it is computed for. With the quite narrow, "spiky", intensity peak 463, corresponding to a signal having more "high frequency" components, there are, as can be seen and as expected, more of higher order DFT coefficients compared to the wider and more "blunt" and wider light distribution of the intensity peak 563.

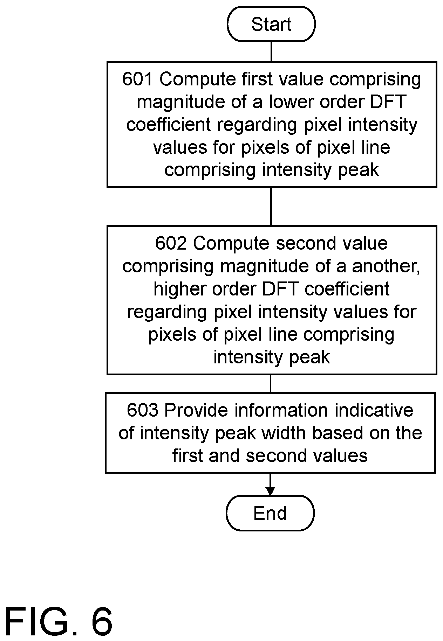

**Figure** 6 is a flowchart for schematically illustrating and exemplifying a method according to embodiments herein that have already been indicated above but will now be disclosed in some further detail. The actions below, which may form the method, are for providing information indicative of an intensity peak width, such as any one of the FWHMs 371, 471 571, of an intensity peak, such as any one of the intensity peaks 363, 463, 563. Said intensity peak is along, such as in or part of, a pixel line, for example a column, such as the column 352-m, of pixels comprising the intensity peak and having intensity pixel values that are part of the intensity peak. For example, said pixels may be any one of the sequences of pixels 366, 466, 566.

Said pixels further correspond to pixel elements of an image sensing area, such as the image sensing area 351, of an image sensor, for example the image sensor 231 or 331. The pixels have attained their intensity pixel values from exposure of the image sensing area as part of image sensing by the image sensor of light, such as structured light, for example a light line, reflected from a surface, such as in the case when the imaging is light triangulation based 3D imaging. The intensity peak is formed of such reflected light sensed by the image sensor, that is, the reflected light is sensed as part of the image sensing. The intensity peak thus corresponding to a cross section of the imaged light line. Relations as in this paragraph were exemplified and explained above in connection with Figures 3A-B.

The method and/or actions below may be performed by one or more devices. As realized by the skilled person, the method with actions as below may be performed in a distributed manner by multiple devices configured to perform the actions and/or that are involved in performing the actions. However, said one or more devices preferably is or comprise said image sensor, for example the image sensor 231 or 331, and/or are part of, or correspond to, a imaging system, such as the imaging system 205. For example, said one or more devices may be or comprise the computing device 233 and/or the camera 230. In the following, the image sensor 331 may be used as a non-limiting example of the image sensor and of a device that performs the method. As understood from what was discussed further above, the image sensor of embodiments herein should in any case be one suitable for use as an image sensor in a camera of an imaging system for 3D imaging of an object based on light triangulation.

Hence:
In some embodiments, the image sensing by the image sensor 331 is part of light triangulation based 3D imaging by an imaging system, for example the imaging system 205, for 3D imaging of an object, such as the object 220, having said surface. The imaging system comprises a camera, such as the camera 230 with the image sensor 231 that may correspond to the image senor 331, and a light source, such as the light source 210, for providing illumination resulting in said light on said surface as part of said light triangulation based 3D imaging. The light, for example light line, on said surface may thus be part of light triangulation based 3D imaging. In some of these embodiments, the intensity peak, such as any one of the intensity peaks 363, 463, 563, is associated with a position on the surface, which position reflected the light resulting in the intensity peak. In these embodiments, said information indicative of the intensity peak width may be provided for use as indication of light scatter from said position.

Note that although it may be preferred from an implementational and/or computational point of view, particularly when the image sensor is involved in performing embodiments herein, that that said pixel line is a pixel column, for example corresponding to a column of pixels elements of the image sensor, the pixel line can in principle be in any direction and/or correspond to any one-dimensional line of pixels, for example any pixel line in any direction on the image sensing area 351 of the image sensor 331, as long as the pixels comprise the intensity peak.

Further, as should be realized, pixel elements of the image sensing area correspond to light sensing elements that sense light during exposure. A respective pixel value attained by a respective pixel element during exposure typically correspond to the an accumulated amount of light that the respective image sensor pixel received during the exposure. The amount and the pixel value typically corresponds to a measure of the light intensity of incident light on the pixel element, or more specifically on a light sensitive portion thereof, during the exposure.

Note that the actions below may be taken in any suitable order and/or be carried out fully or partly overlapping in time when this is possible and suitable.

### Action 601

The image sensor 331 computes a first value comprising, for example corresponding to, a magnitude of a lower order DFT coefficient regarding pixel intensity values for pixels along the pixel line that are comprising the intensity peak. The first value may comprise or correspond to the complex valued lower order DFT coefficient, that comprises its magnitude, the magnitude as such or some other value from which the magnitude can be derived or that identifies the magnitude.

See for example magnitudes of DFT coefficients 473, 573 in Figures 4B, 5B. DFT coefficients in general and how they relate to the DFT, and how they may be computed, are separately discussed below. The lower order DFT coefficient is further commented below under Action 602.

The pixels that the lower order DFT coefficient concerns are thus related to the intensity peak in question. The pixels may for example be the sequences of pixels 366 if the intensity peak is the intensity peak 363, the sequence of pixels 466 if the intensity peak is the intensity peak 463, the sequence of pixels 566 if the intensity peak is the intensity peak 563, but can of course be another, shorter or longer, sequence of pixels comprising the intensity peak.

### Action 602

The image sensor 331 computes a second value comprising, for example corresponding to, a magnitude of another, higher lower order DFT coefficient regarding pixel intensity values for pixels along the pixel line that are comprising the intensity peak. The second value may comprise or correspond to the complex valued higher order DFT coefficient, that comprises its magnitude, the magnitude as such or some other value from which the magnitude can be derived or that identifies the magnitude.

See for example magnitude of DFT coefficients 473, 573 in Figures 4B, 5B. DFT coefficients in general and how they relate to the DFT, and how they may be computed, are separately discussed below.

The pixels that the higher order DFT coefficient concerns are thus related to the intensity peak in question, thus same intensity peak that said lower order DFT coefficient relate to. The pixels are preferably the same pixels that the magnitude of the lower order DFT coefficient are computed for, but this may not be necessary. Hence, the pixels may be the sequences of pixels 366 if the intensity peak is the intensity peak 363, or may be the sequence of pixels 466 if the intensity peak is the intensity peak 463, or may be the sequence of pixels 566 if the intensity peak is the intensity peak 563, but may, of course be another, shorter or longer, sequence of pixels comprising the respective peak.

Preferably, said lower and higher order DFT coefficients comprises one or more of the following:
- The lowest order DFT coefficient. This coefficient may be named DFTO and may for example be any one of DFTO 473-0 and DFTO 573-0.
- The second lowest order DFT coefficient. This coefficient may be named DFT1 and may for example be any one of DFT1 473-1 and DFT1 573-1.
- The third lowest DFT coefficient. This coefficient may be named DFT2 and may for example be any one of DFT2 473-2 and DFT2 573-2.

Preferably, said lower order DFT coefficient is the lowest order DFT coefficient, DFTO. This coefficient exists and will have substantial magnitude for all peaks and can be computed relatively simply compared to the others. The magnitude of DFTO may simply and advantageously be computed as a sum of pixel intensity values for said pixels comprising the intensity peak, for example for pixels 366, 466 or 566.

Preferably, the higher order DFT coefficient is the second lowest DFT coefficient, DFT1, or the third lowest DFT coefficient, DFF2.

DFT coefficients in general and how they relate to the DFT, and how they may be computed, are separately discussed below. Below can also be found examples and comments about how the magnitude of respective DFT coefficient of said two DFT coefficients, the lower and higher, can be computed in practice, for example by the image sensor 331.

### Action 603

The image sensor 331 provides said information indicative of the intensity peak width, such as indicative of any one of the FWHMs 371, 471, 571, based on, such as using, said first and second values. The information should thus be provided as an indication of the intensity peak width, such as for use as indication of, and/or even as a measure and/or estimation of the intensity peak width.

Said information indicative of the width may comprise said first and second values or comprise, or correspond to or be based on, a measure of how the first and second values relate to each other, such as how the magnitudes of said DFT coefficients relate to each other.

The measure may comprise, correspond to or be based on how the first and second values. such as said magnitudes of said lower and higher order DFT coefficients, relate to each other, preferably of how they differ from each other. The measure may comprise, correspond to or be based on a computed quotient or difference between the first and second values, such as between said magnitudes of said lower and higher DFT coefficients. As should be recognized, also a quotient discloses how values, the ones being divided, differ from each other.

In case the information indicative of the width comprises said first and second values, another device outside the image sensor 331 may provide, typically, compute, the measure instead of the image sensor 331, for example based on how the first and second values relate to each other. This device may for example be the computing device 233 or the camera 230.

For example, if said first and second values are the complex valued lower and higher order DFT coefficients, the information indicative of the width may comprise these complex values, correspond to or be based on them. The magnitudes of the DFT coefficients, and/or, the difference between the complex values or their magnitudes, and/or quotient between magnitudes, may be computed outside the image sensor 331.

In another example, respective first and second value is formed by its DFT coefficient real part squared added to its DFT coefficient imaginary part squared. As realized from Eq. 2 below such value comprises the magnitude. The information indicative of the width may comprise these values, correspond to or be based on them, for example may comprise said measure as a computed quotient between the first and second values. The quotient may be computed outside the image sensor 331.

How such quotients and differences mentioned above may relate to, for example map to, widths, such as FWHMs, of intensity peaks is exemplified in the next figures and is further commented in relation to these figures.

Said measure, computed by another device based on the first and second values provided by the image sensor, or computed by the image sensor itself, may thus correspond to a computed estimate of the width of the intensity peak.

Embodiments herein are based on realization that said first and second values that comprise or correspond to magnitudes of said lower and higher order DFT coefficients, and more particularly how they relate to each other, comprise information indicative of the width of the intensity peak. The width, in turn, as explained in the Background, may indicate light scatter from a point on the surface that caused the reflection resulting in the intensity peak. Intensity peak estimation based on embodiments herein have shown ability to provide results that are at least as good as other existing methods, such as "Moment scatter" mentioned in the Background. In some situations and/or for some applications where intensity peak width is of interest, a certain method for intensity peak width estimation may be preferred and/or more advantageous than another, for example depending on information that is needed, is available already, type of devices involved, other actions being performed etc. It is hence in general advantageous with a further alternative method for provision of information indicative, such as by being an estimate, of intensity peak width.

Moreover, the first and second values may be obtained by computations that can be performed by relatively simple operations, that fully or partly can be performed directly on the image sensor, for example the image senor 331, without having to first read out image data from the image sensor. If the image sensor performs computations to compute the first and second values, for example per respective pixel column of the image sensing area with said pixel line corresponding to a pixel column, this may be particularly advantageous since it enables fast and parallel processing per column on the image sensor, typically "on chip", and with provision of results, for example said information, per column as well. This means that said information indicative of the intensity peak width can be provided efficient and fast, already in connection with provision of the image data from the image sensor and/or that the image data need not be transferred from the image sensor at all if, for example, only said information is of interest to find out about.

In some embodiments, the pixels comprising the intensity peak, for example the identity peak 363, are pixels of a ROI, preferably a WAM, as discussed above in relation to Figures 3, partly covering the image sensing area, such as the image sensing area 351. The ROI having been determined to cover a respective intensity peak, such as the intensity peak 363, in a respective column, for example column 352-m, of the image sensing area. The ROI, such as WAM, should have the same number of pixels in the respective column and the image sensor should preferably support provision of parallel readout regarding pixels having the same ROI, or WAM, position, such as same WAM height position.

Embodiments herein are advantageous combined with WAMs, as discussed above in connection with Figure 3A, that is, ROI, or WAM, that covers an imaged light line and intensity peaks thereof. These are intensity peaks also of interest for embodiments herein and embodiments herein can thus be applied combined with use of such ROI, or WAM, for reading out image data regarding the intensity peaks.

For a given imaging system and/or setup of such, that results in the image light line, the skilled person can find out how for example quotients between magnitudes of DFT coefficients, as in embodiments herein, relate to, for example how the quotients map to, intensity peak width. This can for example be made in a calibration procedure using a range of predetermined intensity peak widths and computing quotients for these. A relationship, such as mapping, between quotients and peak widths can be provided through this. With the system implementing embodiments herein, for example its image sensor and/or other device, it may during normal operation compute quotients between magnitudes of DFT coefficients as in embodiments herein and use mapping from the calibration to provide estimates of the intensity peak width. In some applications it may be sufficient to use for example quotients only as measure, and see to changes, for example relative deviations from a "nominal" quotient. A much larger quotient than the nominal one may mean much larger peak width and for example increased light scatter. This in turn may for example indicate material discrepancy in the surface position that reflected the light resulting in the peak.

It should further be noted that an intensity peak resulting from an imaged light line, for example from a reflected laser line, as in embodiments herein, for example when the light line is part of 3D imaging based on light triangulation, will have a "peak shape" with light distribution that in practice will be Gaussian or a least Gaussian like. Further, the DFT will make a narrow peak to have more higher DFT coefficients with substantial magnitude compared to a wider peak. It should be realized that this should result in that the principle of embodiments herein should always work to at least provide indication of intensity peak width, nevertheless the exact light distribution of the peak.

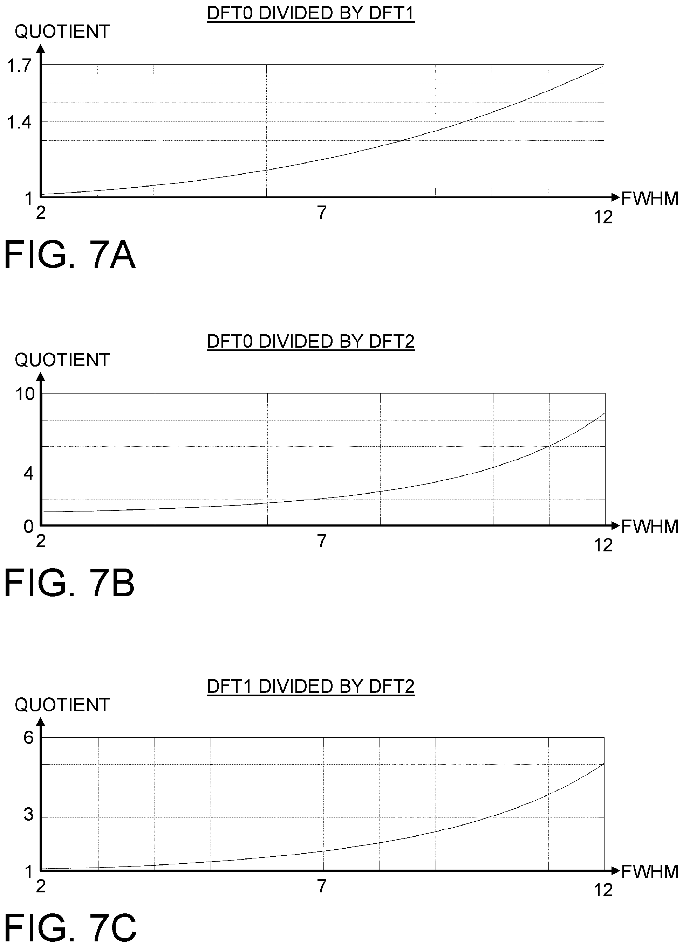

**Figures 7-9** are examples of how different measures of how a lower order DFT coefficient and higher order DFT coefficient relate to each other and how this will map to intensity peak width. The DFT coefficients thus corresponds to said first and second values of embodiments herein and the measures may correspond to said information indicative of the intensity peak width of embodiments herein. The width is in the examples represented by FWHM. The different widths that have been used are for intensity peaks as in Figures 4A, 5A but with different FWHM, and then magnitude of DFT coefficients have been computed for respective peak and used in accordance with embodiments herein. Fuher details follow below per figure.

Figures 7A-C are examples when the measure is a computed quotient between the first and second values, thus the first value divided with the second value, and how the quotient vary with the intensity peak width. More specifically:
Figure 7A is when the first value is computed as magnitude of the lowest order DFT coefficient, DFTO and the second value is computed as magnitude of second lowest order DFT coefficient, DFT1.

Figure 7B is when the first value is computed as magnitude of the lowest order DFT coefficient, DFTO and the second value is computed as magnitude of third lowest order DFT coefficient, DFT2.

Figure 7C is when the first value is computed as magnitude of the second lowest order DFT coefficient, DFT1 and the second value is computed as magnitude of third lowest order DFT coefficient, DFT2.

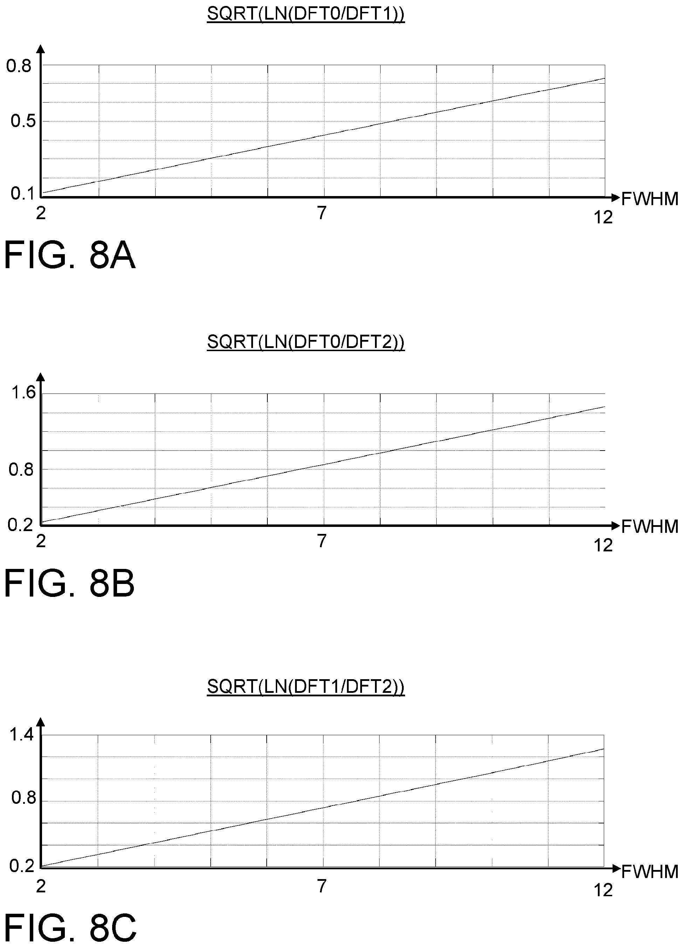

Figures 8A-C are the examples of Figures 7 but instead of quotient it is shown the square root (sqrt) of the natural logarithm (In) of the quotient. Reason is to show that this results in a nice linear relation which may be beneficial in some applications of embodiments herein. Also, for example, in case of a calibration procedure as discussed above, the result can be a simple linear equation for subsequent use during normal operation to get a width estimate.

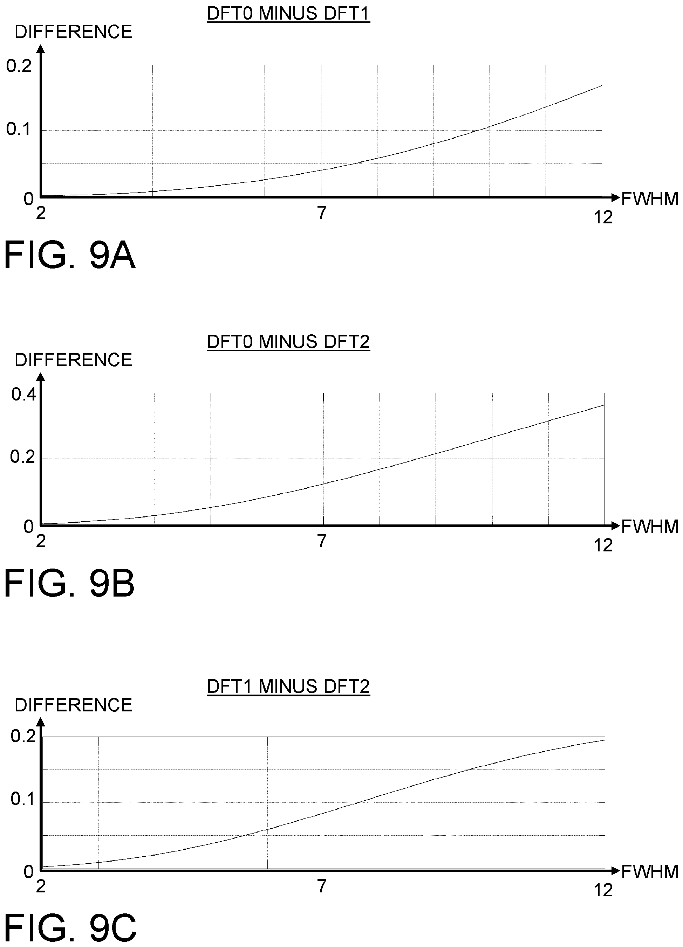

Figures 9A-C are examples when the measure is a computed difference between the first and second values, thus the first value minus the second value, and how the difference vary with the intensity peak width. More specifically:
Figure 9A is when the first value is computed as magnitude of the lowest order DFT coefficient, DFTO and the second value is computed as magnitude of second lowest order DFT coefficient, DFT1.

Figure 9B is when the first value is computed as magnitude of the lowest order DFT coefficient, DFTO and the second value is computed as magnitude of third lowest order DFT coefficient, DFT2.

Figure 9C is when the first value is computed as magnitude of the second lowest order DFT coefficient, DFT1 and the second value is computed as magnitude of the third lowest order DFT coefficient, DFT2.

Although the discrete Fourier transform (DFT) as such is well known and defined from a mathematical perspective, and has been used in practical applications for a long time, it is briefly summarized below to set context for the DFT coefficients that embodiments herein are based on. Some comment are also made how the DFT coefficients may be computed in a context of embodiments herein.

The discrete Fourier transform transforms a sequence of values, typically corresponding to samples, x[n], into another sequence of complex values, X[k], and is defined as: $X \left[k\right] = {\sum }_{n = 0}^{N - 1} x \left[n\right] ⋅ {e}^{- j \frac{2 π}{N} kn}$ (Eq. 1) , where N is the number of values, for example samples, of the sequence. In the context of embodiments herein, the sequence of values x[n] corresponds to the pixel values of the pixels comprising intensity peak, such as the sequence of pixels 466 or 566 with pixel values corresponding to intensities I as indicated in Figures 4A, 5A. Hence, N is the number of pixels involved and is in those examples thus 31. The DFT coefficients correspond to X[k], hence the lowest DFT coefficient, that has been named DFTO above, corresponds to X[0] or X0, DFT1 to X1, DFT2 to X2, etc.

From this and Eq. 1 it is realized, as already mentioned above, that X0, that is, DFTO, is simply a sum of the x[n] for all N values, thus a sum of the pixels values of the pixels comprising the peak.

Generally, DFT coefficients are complex valued and their magnitude can be computed as: $\left|X\left[k\right]\right| = \sqrt{Re {\left(X\left[k\right]\right)}^{2} + Im {\left(X\left[k\right]\right)}^{2}}$ (Eq. 2) , where Re refers to the real part and Im to the imaginary part.

For DFT coefficients above X0, that is, above DFTO, the weighting factor has to be considered and can be written as: ${e}^{- j \frac{2 π}{N} kn} = cos \left(\frac{2 π}{N}kn\right) - j sin \left(\frac{2 π}{N}kn\right)$ (Eq. 3)

For a given DFT coefficient, say X1, that is, DFT1, it is realized the real part of X1 is about multiplying each x[n] with its cosine weighting factor and accumulate the results so that this is done for all N number of x[x], corresponding to doing it for all pixels comprising the intensity peak, such as for all 31 pixels of the sequence of pixels 466. For the imaginary part of X1 it is correspondingly about multiplying each x[n] with its sine weighting factor and accumulate the results. The cosine and sine weighting factor may be pre-computed and for example stored on chip, for example stored on the image sensor 331. The image sensor may for example be configured with the pre-computed weighting factors, such as be programmed, in an initialization phase of the image sensor. The pre-computed weighting factors can then be used in several multiply and accumulate computations for estimating width of several intensity peaks and from multiple exposures of the image sensor to which embodiments herein are to be applied.

As also should be realized, the multiply and accumulate operations may advantageously be performed in parallel, such as per column, on the image sensor, and for example in connection with read out of image data, per pixel line of per WAM height position, from the image sensor's image sensing area, for example the image sensing area 351.

To compute the first and second values of embodiments herein, corresponding to magnitude of two DFT coefficients, this can be done by 4 multiply and accumulate operations, 2 per DFT coefficient for its real and imaginary parts, respectively. If DFTO is computed it suffices with an accumulate operation to compute magnitude of DFTO, and in that case hence in total for the two DFT coefficients, two multiply an accumulate operations, and one accumulate operation.

The first and second values may comprise the real and imaginary parts of the corresponding DFT coefficient and thus be complex values. The values, and/or the real and imaginary parts of the DFT coefficients, may be sent off-chip, for example outside the image sensor, such as outside the image sensor 331, where the DFT coefficient magnitude computation(s) and/or for example width estimation may be performed. This way of operation has already been indicated above. For example, the computing device 233 or the camera 230 with computing capabilities may be configured to perform the magnitude computations and/or computations for final width estimation. Anther device like these may be more suitable to perform those computations than the image sensor as such.

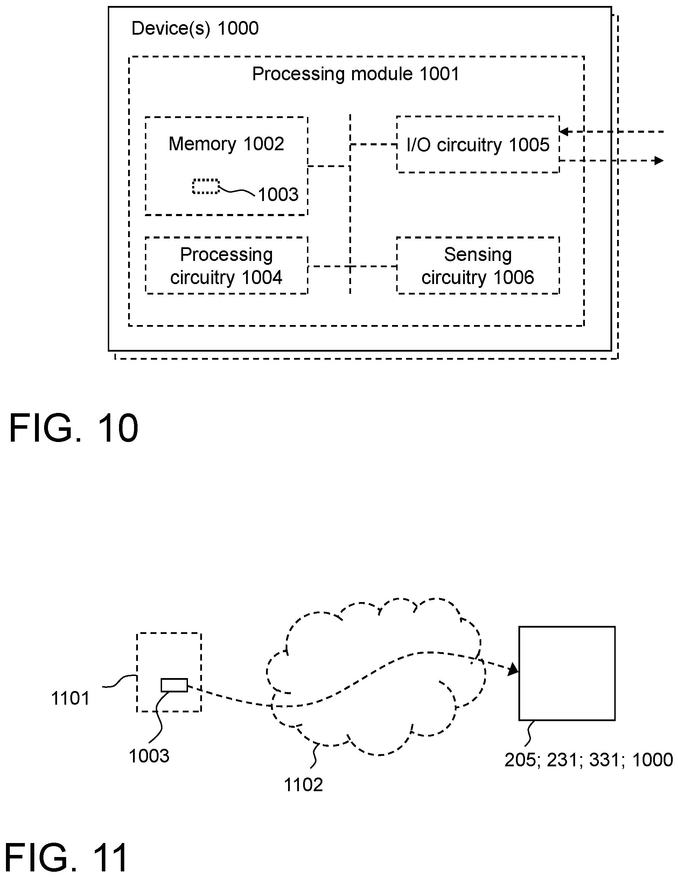

**Figure** 10 is a schematic block diagram for illustrating embodiments of how one or more devices 1000, in other words device(s) 1000, that may correspond to devices(s) already mentioned in the above, generally may be configured to perform the method and actions described in relation to Figure 6. There may be multiple devices configured to be involved in and/or to perform the method and/actions, that is, in a distributed manner. Said device(s) 1000 comprise said image sensor, for example the image sensor 231 or 331, and/or are part of the imaging system, such as the imaging system 205. For example, said one or more devices may be or comprise the computing device 233 and/or the camera 230. What is shown in Figure 10 may be considered a different view of how the image sensor 331 may be configured.

Hence:
The devices(s) 1000 may comprise processing module(s) 1001, such as processing means, one or more hardware modules, including e.g. one or more processing circuits, circuitry, such as processors, and/or one or more software modules for performing said method and/or actions.

The device(s) 1000 may further comprise memory/ies 1002 that may comprise, such as contain or store, computer program(s) 1003. The computer program(s) 1003 comprises 'instructions' or 'code' directly or indirectly executable by the device(s) 1000 to perform said method and/or actions. The memory 1002 may comprise one or more memory units and may further be arranged to store data, such as configurations, data and/or values, involved in or for performing functions and actions of embodiments herein.

Moreover, the device(s) may comprise processing circuitry/ies 1004 involved in processing and e.g. encoding data, as exemplifying hardware module(s) and may comprise or correspond to one or more processors or processing circuits. The processing module(s) 1001 may comprise, e.g. 'be embodied in the form of' or 'realized by' the processing circuitry 1004. In these embodiments, the memory 1002 may comprise the computer program(s) 1003 executable by the processing circuitry/ies 1004, whereby the device(s) 1000 is operative, or configured, to perform said method and/or actions.

The device(s) 1000, e.g. the processing module(s) 1001, may comprise Input/Output (I/O) module(s) 1005, configured to be involved in, e.g. by performing, any communication to and/or from other units and/or devices, such as sending and/or receiving information to and/or from other devices. The I/O module(s) 1005 may be exemplified by obtaining, e.g. receiving, module(s) and/or providing, e.g. sending, module(s), when applicable.

Additionally, the device(s) 1000 may comprise sensing circuitry 1006 as exemplifying hardware module(s), involved in sensing light and/or images, for example fully or partly corresponding to or comprising what was discussed above regarding the image sensor 331, including for example an image sensing area, such as the image sensing area 351.

Further, in some embodiments, the device(s) 1000, e.g. the processing module(s) 1001, comprises one or more of obtaining module(s), exposing module(s), sensing module(s), computing module(s), providing module(s), as exemplifying hardware and/or software module(s) for carrying out actions of embodiments herein. These modules may be fully or partly implemented by the processing circuitry/ies 1004.

Hence:
The device(s) 1000, and/or the processing module(s) 1001, and/or the processing circuitry/ies 1004, and/or the computing module(s), are operative, or configured, to, compute said first value comprising the magnitude of said lower order DFT coefficient.

The device(s) 1000, and/or the processing module(s) 1001, and/or the processing circuitry/ies 1004, and/or the computing module(s), are operative, or configured, to, compute said second value comprising the magnitude of said higher order DFT coefficient.

The device(s) 1000, and/or the processing module(s) 1001, and/or the processing circuitry/ies 1004, and/or the providing module(s), and/or the I/O module(s) 1005, are operative, or configured, to, provide said information indicative of the intensity peak width based on said first and second values.

**Figure 11** is a schematic drawing illustrating some embodiments relating to the computer program(s) 1003 and carriers thereof to cause said device(s) 1000 discussed above to perform said methods and actions or make them be performed.

Respective computer program 1003 comprises instructions that when executed by suitable processing circuitry, such as the processing circuitry 1004 and/or processing module, such as processing module 1001, cause the corresponding device(s) 1000 to perform as described above. In some embodiments there is provided one or more carriers, that is carrier(s), or more specifically data carrier(s), such as computer program product(s), comprising the computer program(s). Respective carrier(s) may be one of an electronic signal, an optical signal, a radio signal, and a computer readable storage medium, e.g. a computer readable storage medium 1101 as schematically illustrated in the figure. The computer program(s) may thus be stored on the computer readable storage medium 1101. By carrier may be excluded a transitory, propagating signal and the data carrier may correspondingly be named non-transitory data carrier. Non-limiting examples of the data carrier being a computer readable storage medium is a memory card or a memory stick, a disc storage medium or a mass storage device that typically is based on hard drive(s) or Solid State Drive(s) (SSD). The computer readable storage medium 1101 may be used for storing data accessible over a computer network 1102, e.g. the Internet or a Local Area Network (LAN). The computer program(s) may furthermore be provided as pure computer program(s) or comprised in a file or files. The file or files may be stored on the computer readable storage medium 1101 and for example be available through download, for example over the computer network 1102 as indicated in the figure, such as via a server. The server may be a web or File Transfer Protocol (FTP) based server, or similar. The file or files may be executable files for direct or indirect download to and execution on the device(s) 1000, e.g. by execution by suitable respective processing circuitry. The file or files may also or alternatively be for intermediate download and compilation involving the same or another processor(s) to make them executable before further download and execution causing said device(s) 1000 to perform as described above.

Note that any processing module(s) and circuit(s) mentioned in the foregoing may be implemented as a software and/or hardware module, e.g. in existing hardware and/or as an Application Specific Integrated Circuit (ASIC), a Field-Programmable Gate Array (FPGA) or the like. Also note that any hardware module(s) and/or circuit(s) mentioned in the foregoing may e.g. be included in a single ASIC or FPGA, or be distributed among several separate hardware components, whether individually packaged or assembled into a System-on-a-Chip (SoC).

Those skilled in the art will also appreciate that the modules and circuitry discussed herein may refer to a combination of hardware modules, software modules, analog and digital circuits, and/or one or more processors configured with software and/or firmware, e.g. stored in memory, that, when executed by the one or more processors may make the device(s), sensor(s) etc. to be configured to and/or to perform the above-described methods and actions.

Identification by any identifier herein may be implicit or explicit. The identification may be unique in a certain context, e.g. for a certain computer program or program provider.

As used herein, the term "memory" may refer to a data memory for storing digital information, typically a hard disk, a magnetic storage, medium, a portable computer diskette or disc, flash memory, Random Access Memory (RAM) or the like. Furthermore, the memory may be an internal register memory of a processor.

Also note that any enumerating terminology such as first device, second device, first surface, second surface, etc., should as such be considered non-limiting and the terminology as such does not imply a certain hierarchical relation. Without any explicit information in the contrary, naming by enumeration should be considered merely a way of accomplishing different names.

As used herein, the expression "configured to" may mean that a processing circuit is configured to, or adapted to, by means of software or hardware configuration, perform one or more of the actions described herein.

As used herein, the terms "number" or "value" may refer to any kind of digit, such as binary, real, imaginary or rational number or the like. Moreover, "number" or "value" may be one or more characters, such as a letter or a string of letters. Also, "number" or "value" may be represented by a bit string.

As used herein, the expression "may" and "in some embodiments" has typically been used to indicate that the features described may be combined with any other embodiment disclosed herein.

In the drawings, features that may be present in only some embodiments are typically drawn using dotted or dashed lines.

When using the word "comprise" or "comprising" it shall be interpreted as nonlimiting, i.e. meaning "consist at least of".

The embodiments herein are not limited to the above described embodiments. Various alternatives, modifications and equivalents may be used. Therefore, the above embodiments should not be taken as limiting the scope of the present disclosure, which is defined by the appending claims.

## Claims

1. A method, performed by one or more devices (205; 231; 331; 1000), for providing information indicative of an intensity peak width (371; 471; 571) of an intensity peak (363; 463; 563) along a pixel line (352-m) of pixels (366; 466; 566) comprising the intensity peak (363; 463; 563) and having intensity pixel values that are part of the intensity peak (363; 463; 563), wherein said pixels correspond to pixel elements of an image sensing area (351) of an image sensor (231; 331) and have attained their intensity pixel values from exposure of the image sensing area (351) as part of image sensing by the image sensor (231; 331) of light reflected from a surface, said intensity peak (363; 463; 563) being formed of such reflected light sensed by the image sensor (231; 331), wherein the method comprises:
- receiving image related data from the image sensor (231; 331);
- computing (601) a first value comprising a magnitude of a lower order Discrete Fourier Transform, DFT, coefficient (473; 573) regarding pixel intensity values for pixels (366; 466; 566) of the image related data from the image sensor (231; 331) along the pixel line (352-m) that are comprising the intensity peak (363; 463; 563);
- computing (602) a second value comprising a magnitude of a another, higher order DFT coefficient (473; 573) regarding pixel intensity values for pixels (366; 466; 566) along the pixel line (352-m) that are comprising the intensity peak (363; 463; 563), said higher order being a higher order DFT coefficient (473; 573) than said lower order DFT coefficient (473; 573), and
- providing (603) said information indicative of the intensity peak width (371; 471; 571) based on said first and second values, wherein the image sensing by the image sensor (231; 331) is part of light triangulation based three-dimensional, 3D, imaging by an imaging system (205) for 3D imaging of an object (220) having said surface, wherein the imaging system (205) comprises a camera (230) with the image sensor (231; 331) and a light source (210) for providing illumination resulting in said light on said surface as part of said light triangulation based 3D imaging.

2. The method as claimed in claim 1, wherein the intensity peak (363; 463; 563) is associated with a position on the surface, which position reflected the light resulting in the intensity peak (363; 463; 563), wherein said information indicative of the intensity peak width is provided for use as indication of light scatter from said position.

3. The method as claimed in any one of claims 1-2, wherein said lower and higher order DFT coefficients (473; 573) comprises one or more of the following: the lowest order DFT coefficient (473-0; 573-0), the second lowest order DFT coefficient (473-1; 573-1) and the third lowest DFT coefficient (473-2; 573-2).

4. The method as claimed in any one of claim 1-3, wherein the lower order DFT coefficient is the lowest order DFT coefficient (473-0; 573-2)

5. The method as claimed in claim 4, wherein the magnitude of the lowest order DFT coefficient (473-0; 573-0) is computed as a sum of pixel intensity values for said pixels (366; 466; 566) comprising the intensity peak (363; 463; 563).

6. The method as claimed in any one of claims 4-5, wherein the higher order DFT coefficient is the second lowest DFT coefficient (473-1; 573-1) or the third lowest DFT coefficient (473-2; 573-2).

7. The method as claimed in any one of claims 1-6, wherein said information indicative of the width comprises said first and second values.

8. The method as claimed in any one of claims 1-6, wherein said information indicative of the width comprises or is based on a measure of how the first and second values relate to each other.

9. The method as claimed in claim 8, wherein the measure is based on a computed quotient or difference between the first and second values.

10. The method as claimed in any one of claims 1-9, wherein the pixels comprising the intensity peak are selected by a Region Of Interest, ROI, party covering the image sensing area (351) and that was determined to cover a respective intensity peak (363) in a respective column (352-m) of pixel elements of the image sensing area (351).

11. The method as claimed in any one of claims 1-10, wherein the method is performed by one or more devices that comprise the image sensor, and/or are part of the imaging system in any one of claims 1 or 2.

12. One or more devices (205; 231; 331; 1000), configured to perform the method of any of claims 1-11, for providing information indicative of an intensity peak width (371; 471; 571) of an intensity peak (363; 463; 563) along a pixel line (352-m) of pixels (366; 466; 566) comprising the intensity peak (363; 463; 563) and having intensity pixel values that are part of the intensity peak (363; 463; 563), wherein said pixels correspond to pixel elements of an image sensing area (351) of an image sensor (231; 331) and have attained their intensity pixel values from exposure of the image sensing area (351) as part of image sensing by the image sensor (231; 331) of light reflected from a surface, said intensity peak (363; 463; 563) being formed of such reflected light sensed by the image sensor (231; 331), wherein said one or more devices are configured to:
receive image related data from the image sensor (231; 331);
compute (601) a first value comprising a magnitude of a lower order Discrete Fourier Transform, DFT, coefficient (473; 573) regarding pixel intensity values for pixels (366; 466; 566) of the image related data from the image sensor (231; 331) along the pixel line (352-m) that are comprising the intensity peak (363; 463; 563);
compute (602) a second value comprising a magnitude of a another, higher order DFT coefficient (473; 573) regarding pixel intensity values for pixels (366; 466; 566) along the pixel line (352-m) that are comprising the intensity peak (363; 463; 563), said higher order being a higher order DFT coefficient (473; 573) than said lower order DFT coefficient (473; 573), and
provide (603) said information indicative of the intensity peak width (371; 471; 571) based on said first and second values, wherein the image sensing by the image sensor (231; 331) is part of light triangulation based three-dimensional, 3D, imaging by an imaging system (205) for 3D imaging of an object (220) having said surface,
wherein the imaging system (205) comprises a camera (230) with the image sensor (231; 331) and a light source (210) for providing illumination resulting in said light on said surface as part of said light triangulation based 3D imaging.

13. One or more computer programs (1003) comprising instructions that when executed by one or more processors cause the one or more devices of claim 12 to perform the method according to any one of claims 1-11.

14. One or more carriers comprising the one or more computer programs (1003) according to claim 13, wherein the one or more carriers are one or more of the following: electronic signal, optical signal, radio signal or computer readable storage medium (1101).

## Patentansprüche

1. Verfahren, ausgeführt von einer oder mehreren Vorrichtungen (205; 231; 331; 1000), zum Bereitstellen von Informationen, die auf eine Intensitätsspitzenbreite (371; 471; 571) einer Intensitätsspitze (363; 463; 563) entlang einer Pixellinie (352-m) von Pixeln (366; 466; 566) hinweisend sind, die die Intensitätsspitze (363; 463; 563) umfassen und Intensitätspixelwerte aufweisen, die Teil der Intensitätsspitze (363; 463; 563) sind, wobei die Pixel Pixelelementen einer Bilderfassungsfläche (351) eines Bildsensors (231; 331) entsprechen und ihre Intensitätspixelwerte aus einer Belichtung der Bilderfassungsfläche (351) als Teil einer Bilderfassung durch den Bildsensor (231; 331) von einer Oberfläche reflektiertem Licht erlangt haben, wobei die Intensitätsspitze (363; 463; 563) aus solchem von dem Bildsensor (231; 331) erfassten reflektierten Licht gebildet ist, wobei das Verfahren Folgendes umfasst:
- Empfangen bildbezogener Daten von dem Bildsensor (231; 331);
- Berechnen (601) eines ersten Werts, der einen Betrag eines DFT-Koeffizienten niedrigerer Ordnung einer Diskreten Fourier-Transformation, DFT, (473; 573) bezüglich Pixelintensitätswerten für Pixel (366; 466; 566) der bildbezogenen Daten von dem Bildsensor (231; 331) entlang der Pixellinie (352-m) umfasst, die die Intensitätsspitze (363; 463; 563) umfassen;
- Berechnen (602) eines zweiten Werts, der einen Betrag eines anderen DFT-Koeffizienten höherer Ordnung (473; 573) bezüglich Pixelintensitätswerten für Pixel (366; 466; 566) entlang der Pixellinie (352-m) umfasst, die die Intensitätsspitze (363; 463; 563) umfassen, wobei die höhere Ordnung ein DFT-Koeffizient höherer Ordnung (473; 573) ist als der DFT-Koeffizient niedrigerer Ordnung (473; 573), und
- Bereitstellen (603) der Informationen, die auf die Intensitätsspitzenbreite (371; 471; 571) hinweisend sind, basierend auf dem ersten und dem zweiten Wert, wobei die Bilderfassung durch den Bildsensor (231; 331) Teil einer auf Lichttriangulation basierenden dreidimensionalen, 3D-, Bildgebung durch ein Bildgebungssystem (205) zur 3D-Bildgebung eines Objekts (220) mit der Oberfläche ist, wobei das Bildgebungssystem (205) eine Kamera (230) mit dem Bildsensor (231; 331) und eine Lichtquelle (210) zum Bereitstellen von Beleuchtung umfasst, die in dem Licht auf der Oberfläche als Teil der auf Lichttriangulation basierenden 3D-Bildgebung resultiert.

2. Verfahren nach Anspruch 1, wobei die Intensitätsspitze (363; 463; 563) mit einer Position auf der Oberfläche assoziiert ist, welche Position das Licht reflektiert hat, das in der Intensitätsspitze (363; 463; 563) resultiert, wobei die auf die Intensitätsspitzenbreite hinweisenden Informationen zur Verwendung als Angabe einer Lichtstreuung von der Position bereitgestellt werden.

3. Verfahren nach einem der Ansprüche 1-2, wobei die DFT-Koeffizienten (473; 573) niedrigerer und höherer Ordnung einen oder mehrere der folgenden umfassen: der DFT-Koeffizient niedrigster Ordnung (473-0; 573-0), der DFT-Koeffizient zweitniedrigster Ordnung (473-1; 573-1) und der drittniedrigste DFT-Koeffizient (473-2; 573-2).

4. Verfahren nach einem der Ansprüche 1-3, wobei der DFT-Koeffizient niedrigerer Ordnung der DFT-Koeffizient niedrigster Ordnung (473-0; 573-2) ist

5. Verfahren nach Anspruch 4, wobei der Betrag des DFT-Koeffizienten niedrigster Ordnung (473-0; 573-0) als eine Summe von Pixelintensitätswerten für die Pixel (366; 466; 566), die die Intensitätsspitze (363; 463; 563) umfassen, berechnet wird.

6. Verfahren nach einem der Ansprüche 4-5, wobei der DFT-Koeffizient höherer Ordnung der DFT-Koeffizient zweitniedrigster Ordnung (473-1; 573-1) oder der drittniedrigste DFT-Koeffizient (473-2; 573-2) ist.

7. Verfahren nach einem der Ansprüche 1-6, wobei die Informationen, die auf die Breite hinweisend sind, den ersten und den zweiten Wert umfassen.

8. Verfahren nach einem der Ansprüche 1-6, wobei die Informationen, die auf die Breite hinweisend sind, ein Maß dafür umfassen oder basierend auf einem Maß dafür sind, wie der erste und der zweite Wert sich zueinander verhalten.

9. Verfahren nach Anspruch 8, wobei das Maß basierend auf einem berechneten Quotienten oder einer berechneten Differenz zwischen dem ersten und dem zweiten Wert ist.

10. Verfahren nach einem der Ansprüche 1-9, wobei die Pixel, die die Intensitätsspitze umfassen, durch eine Region von Interesse, ROI, die die Bilderfassungsfläche (351) teilweise abdeckend ist und von der bestimmt wurde, dass sie eine jeweilige Intensitätsspitze (363) in einer jeweiligen Spalte (352-m) von Pixelelementen der Bilderfassungsfläche (351) abdeckt, ausgewählt werden.

11. Verfahren nach einem der Ansprüche 1-10, wobei das Verfahren von einer oder mehreren Vorrichtungen ausgeführt wird, die den Bildsensor umfassen und/oder Teil des Bildgebungssystems in einem der Ansprüche 1 oder 2 sind.

12. Eine oder mehrere Vorrichtungen (205; 231; 331; 1000), ausgebildet, das Verfahren nach einem der Ansprüche 1 bis 11 auszuführen, zum Bereitstellen von Informationen, die auf eine Intensitätsspitzenbreite (371; 471; 571) einer Intensitätsspitze (363; 463; 563) entlang einer Pixellinie (352-m) von Pixeln (366; 466; 566) hinweisend sind, die die Intensitätsspitze (363; 463; 563) umfassen und Intensitätspixelwerte aufweisen, die Teil der Intensitätsspitze (363; 463; 563) sind, wobei die Pixel Pixelelementen einer Bilderfassungsfläche (351) eines Bildsensors (231; 331) entsprechen und ihre Intensitätspixelwerte aus einer Belichtung der Bilderfassungsfläche (351) als Teil einer Bilderfassung durch den Bildsensor (231; 331) von einer Oberfläche reflektiertem Licht erlangt haben, wobei die Intensitätsspitze (363; 463; 563) aus solchem von dem Bildsensor (231; 331) erfassten reflektierten Licht gebildet ist, wobei die eine oder mehreren Vorrichtungen ausgebildet sind:
bildbezogene Daten von dem Bildsensor (231; 331) zu empfangen;
einen ersten Wert zu berechnen (601), der einen Betrag eines DFT-Koeffizienten niedrigerer Ordnung einer Diskreten Fourier-Transformation, DFT, (473; 573) bezüglich Pixelintensitätswerten für Pixel (366; 466; 566) der bildbezogenen Daten von dem Bildsensor (231; 331) entlang der Pixellinie (352-m) umfasst, die die Intensitätsspitze (363; 463; 563) umfassen;
einen zweiten Wert zu berechnen (602), der einen Betrag eines anderen DFT-Koeffizienten höherer Ordnung (473; 573) bezüglich Pixelintensitätswerten für Pixel (366; 466; 566) entlang der Pixellinie (352-m) umfasst, die die Intensitätsspitze (363; 463; 563) umfassen, wobei die höhere Ordnung ein DFT-Koeffizient höherer Ordnung (473; 573) ist als der DFT-Koeffizient niedrigerer Ordnung (473; 573), und
die Informationen bereitzustellen (603), die auf die Intensitätsspitzenbreite (371; 471; 571) hinweisend sind, basierend auf dem ersten und dem zweiten Wert, wobei die Bilderfassung durch den Bildsensor (231; 331) Teil einer auf Lichttriangulation basierenden dreidimensionalen, 3D-, Bildgebung durch ein Bildgebungssystem (205) zur 3D-Bildgebung eines Objekts (220) mit der Oberfläche ist, wobei das Bildgebungssystem (205) eine Kamera (230) mit dem Bildsensor (231; 331) und eine Lichtquelle (210) zum Bereitstellen von Beleuchtung umfasst, die in dem Licht auf der Oberfläche als Teil der auf Lichttriangulation basierenden 3D-Bildgebung resultiert.

13. Ein oder mehrere Computerprogramme (1003), die Anweisungen umfassen, die, wenn sie von einem oder mehreren Prozessoren ausgeführt werden, bewirken, dass die eine oder mehreren Vorrichtungen nach Anspruch 12 das Verfahren nach einem der Ansprüche 1 bis 11 ausführen.

14. Ein oder mehrere Träger, die das eine oder die mehreren Computerprogramme (1003) nach Anspruch 13 umfassen, wobei es sich bei dem einen oder mehreren Trägern um eines oder mehrere der Folgenden handelt: elektronisches Signal, optisches Signal, Funksignal oder computerlesbares Speichermedium (1101).

## Revendications

1. Procédé, mis en œuvre par un ou plusieurs dispositifs (205 ; 231 ; 331 ; 1000), pour fournir des informations indiquant une largeur de pic d'intensité (371 ; 471 ; 571) d'un pic d'intensité (363 ; 463 ; 563) le long d'une ligne de pixels (352-m) de pixels (366 ; 466 ; 566) comprenant le pic d'intensité (363 ; 463 ; 563) et présentant des valeurs d'intensité de pixel qui font partie du pic d'intensité (363 ; 463 ; 563), dans lequel lesdits pixels correspondent à des éléments de pixel d'une zone de détection d'image (351) d'un capteur d'image (231 ; 331) et ont atteint leurs valeurs d'intensité de pixel à partir d'une exposition de la zone de détection d'image (351) en tant que partie d'une détection d'image par le capteur d'image (231 ; 331) de lumière réfléchie par une surface, ledit pic d'intensité (363 ; 463 ; 563) étant formé d'une telle lumière réfléchie détectée par le capteur d'image (231; 331), dans lequel le procédé comprend :
- la réception de données relatives à l'image provenant du capteur d'image (231 ; 331) ;
- le calcul (601) d'une première valeur comprenant une amplitude d'un coefficient de transformée de Fourier discrète, TFD, d'ordre inférieur (473 ; 573) concernant des valeurs d'intensité de pixel pour les pixels (366 ; 466 ; 566) des données relatives à l'image provenant du capteur d'image (231 ; 331) le long de la ligne de pixels (352-m) qui comprennent le pic d'intensité (363 ; 463 ; 563) ;
- le calcul (602) d'une deuxième valeur comprenant une amplitude d'un autre coefficient de TFD d'ordre supérieur (473 ; 573) concernant des valeurs d'intensité de pixel pour les pixels (366 ; 466 ; 566) le long de la ligne de pixels (352-m) qui comprennent le pic d'intensité (363 ; 463 ; 563), ledit ordre supérieur étant un coefficient de TFD d'ordre supérieur (473 ; 573) par rapport audit coefficient de TFD d'ordre inférieur (473 ; 573), et
- la fourniture (603) desdites informations indiquant la largeur de pic d'intensité (371 ; 471 ; 571) sur la base desdites première et deuxième valeurs, dans lequel la détection d'image par le capteur d'image (231 ; 331) fait partie d'une imagerie tridimensionnelle, 3D, basée sur une triangulation de lumière par un système d'imagerie (205) pour l'imagerie 3D d'un objet (220) présentant ladite surface, dans lequel le système d'imagerie (205) comprend une caméra (230) pourvue du capteur d'image (231 ; 331) et une source de lumière (210) pour fournir un éclairage entraînant ladite lumière sur ladite surface en tant que partie de ladite imagerie 3D basée sur une triangulation de lumière.

2. Procédé selon la revendication 1, dans lequel le pic d'intensité (363 ; 463 ; 563) est associé à une position sur la surface, laquelle position a réfléchi la lumière entraînant le pic d'intensité (363 ; 463 ; 563), dans lequel lesdites informations indiquant la largeur de pic d'intensité sont fournies pour être utilisées comme indication d'une diffusion de lumière à partir de ladite position.

3. Procédé selon l'une quelconque des revendications 1 à 2, dans lequel lesdits coefficients de TFD d'ordre inférieur et d'ordre supérieur (473 ; 573) comprennent un ou plusieurs des éléments suivants : le coefficient de TFD d'ordre le plus bas (473-0 ; 573-0), le coefficient de TFD du deuxième ordre le plus bas (473-1 ; 573-1) et le coefficient de TFD du troisième ordre le plus bas (473-2 ; 573-2).

4. Procédé selon l'une quelconque des revendications 1 à 3, dans lequel le coefficient de TFD d'ordre inférieur est le coefficient de TFD d'ordre le plus bas (473-0 ; 573-2)

5. Procédé selon la revendication 4, dans lequel l'amplitude du coefficient de TFD d'ordre le plus bas (473-0 ; 573-0) est calculée en tant que somme de valeurs d'intensité de pixel pour lesdits pixels (366 ; 466 ; 566) comprenant le pic d'intensité (363 ; 463 ; 563).

6. Procédé selon l'une quelconque des revendications 4 à 5, dans lequel le coefficient de TFD d'ordre supérieur est le coefficient de TFD du deuxième ordre le plus bas (473-1 ; 573-1) ou le coefficient de TFD du troisième ordre le plus bas (473-2 ; 573-2).

7. Procédé selon l'une quelconque des revendications 1 à 6, dans lequel lesdites informations indiquant la largeur comprennent lesdites première et deuxième valeurs.

8. Procédé selon l'une quelconque des revendications 1 à 6, dans lequel lesdites informations indiquant la largeur comprennent ou sont basées sur une mesure de la manière dont les première et deuxième valeurs se rapportent l'une à l'autre.

9. Procédé selon la revendication 8, dans lequel la mesure est basée sur un quotient calculé ou une différence calculée entre les première et deuxième valeurs.

10. Procédé selon l'une quelconque des revendications 1 à 9, dans lequel les pixels comprenant le pic d'intensité sont sélectionnés par un groupe de région d'intérêt, ROI, couvrant la zone de détection d'image (351) et qui a été déterminé pour couvrir un pic d'intensité (363) respectif dans une colonne (352-m) respective d'éléments de pixel de la zone de détection d'image (351).

11. Procédé selon l'une quelconque des revendications 1 à 10, dans lequel le procédé est mis en œuvre par un ou plusieurs dispositifs qui comprennent le capteur d'image, et/ou font partie du système d'imagerie selon l'une quelconque des revendications 1 ou 2.

12. Un ou plusieurs dispositifs (205 ; 231 ; 331 ; 1000), configurés pour mettre en œuvre le procédé selon l'une quelconque des revendications 1 à 11, pour fournir des informations indiquant une largeur de pic d'intensité (371 ; 471 ; 571) d'un pic d'intensité (363 ; 463 ; 563) le long d'une ligne de pixels (352-m) de pixels (366 ; 466 ; 566) comprenant le pic d'intensité (363 ; 463 ; 563) et présentant des valeurs d'intensité de pixel qui font partie du pic d'intensité (363 ; 463 ; 563), dans lequel lesdits pixels correspondent à des éléments de pixel d'une zone de détection d'image (351) d'un capteur d'image (231 ; 331) et ont atteint leurs valeurs d'intensité de pixel à partir d'une exposition de la zone de détection d'image (351) en tant que partie d'une détection d'image par le capteur d'image (231 ; 331) de lumière réfléchie par une surface, ledit pic d'intensité (363 ; 463 ; 563) étant formé d'une telle lumière réfléchie détectée par le capteur d'image (231; 331), dans lequel lesdits un ou plusieurs dispositifs sont configurés pour :
recevoir des données relatives à l'image provenant du capteur d'image (231 ; 331) ;
calculer (601) une première valeur comprenant une amplitude d'un coefficient de transformée de Fourier discrète, TFD, d'ordre inférieur (473 ; 573) concernant des valeurs d'intensité de pixel pour les pixels (366 ; 466 ; 566) des données relatives à l'image provenant du capteur d'image (231 ; 331) le long de la ligne de pixels (352-m) qui comprennent le pic d'intensité (363 ; 463 ; 563) ;
calculer (602) une deuxième valeur comprenant une amplitude d'un autre coefficient de TFD d'ordre supérieur (473 ; 573) concernant des valeurs d'intensité de pixel pour les pixels (366 ; 466 ; 566) le long de la ligne de pixels (352-m) qui comprennent le pic d'intensité (363 ; 463 ; 563), ledit ordre supérieur étant un coefficient de TFD d'ordre supérieur (473 ; 573) par rapport audit coefficient de TFD d'ordre inférieur (473 ; 573), et
fournir (603) lesdites informations indiquant la largeur de pic d'intensité (371 ; 471 ; 571) sur la base desdites première et deuxième valeurs, dans lequel la détection d'image par le capteur d'image (231 ; 331) fait partie d'une imagerie tridimensionnelle, 3D, basée sur une triangulation de lumière par un système d'imagerie (205) pour l'imagerie 3D d'un objet (220) présentant ladite surface,
dans lequel le système d'imagerie (205) comprend une caméra (230) pourvue du capteur d'image (231 ; 331) et une source de lumière (210) pour fournir un éclairage entraînant ladite lumière sur ladite surface en tant que partie de ladite imagerie 3D basée sur une triangulation de lumière.

13. Un ou plusieurs programmes informatiques (1003) comprenant des instructions qui, lorsqu'elles sont exécutées par un ou plusieurs processeurs, amènent les un ou plusieurs dispositifs de la revendication 12 à mettre en œuvre le procédé selon l'une quelconque des revendications 1 à 11.

14. Un ou plusieurs supports comprenant les un ou plusieurs programmes informatiques (1003) selon la revendication 13, dans lequel ou lesquels les un ou plusieurs supports sont un ou plusieurs éléments parmi les éléments suivants : un signal électronique, un signal optique, un signal radio ou un support de stockage lisible par ordinateur (1101).
